# EUROPEAN PATENT SPECIFICATION

(11) **EP 3 190 034 B1**
(45) Date of publication and mention of the grant of the patent: **06.05.2020**
(21) Application number: 17150034.1
(22) Date of filing: 02.01.2017
(51) Int. Cl.: B62J 17/04

(54) **WINDSHIELD DEVICE FOR SADDLE-RIDE TYPE VEHICLE**
WINDSCHUTZSCHEIBENVORRICHTUNG EINES SATTELFAHRZEUGS
DISPOSITIF DE PARE-BRISE D'UN VÉHICULE DE TYPE À SELLE

(30) Priority: 08.01.2016 JP 2016002988; 27.06.2016 JP 2016126979
(43) Date of publication of application: 12.07.2017
(73) Proprietor: Honda Motor Co., Ltd., Tokyo 107-8556 (JP)
(72) Inventor: MAEDA, Rui, Saitama, 351-0193 (JP); ONUKI, Hirotaka, Saitama, 351-0193 (JP); NISHIMURA, Satoshi, Saitama, 351-0193 (JP)
(74) Representative: Weickmann & Weickmann PartmbB

(56) References cited:
- WO-A1-2014/001013
- DE-A1- 3 609 595
- DE-A1-102004 032 241
- JP-A- 2008 169 673

## Description

### [Technical Field]

The present invention relates to a windshield device for a saddle-ride type vehicle.

### [Background Art]

Heretofore, in windshield devices for saddle-ride type vehicles, there has been known one in which a windscreen (windshield portion) is made to be movable about a shaft arranged to be directed in a vehicle width direction and in which the windscreen is made to be adjustable in position and angle (refer to JP-A No. H7-329859, for example). In JP-A No. H7-329859, the windscreen is supported by guide connecting bars (links) of four in total including those of upper, lower, right and left, and these guide connecting bars are pivotally moved by a motor through the aforementioned shaft to move the windscreen.

WO 2014/001013 A1 shows a windshield device according to the preamble of claims 1 and 8. There, the windshield is positioned by a self-locking worm gear driven by a hand wheel.

### [Summary of Invention]

### [Technical Problem]

By the way, in saddle-ride type vehicles, a restriction is given to the arrangement space for parts, and thus, it is required that a windshield device be of a movable type as well as be downsized.

The present invention has been made in view of the above-mentioned circumstances, and an object of the present invention is to make it possible that in a windshield device for a saddle-ride type vehicle, the windshield device is made to be of a movable type as well as to be downsized.

### [Solution to Problem]

To attain the abovementioned object, the present invention is a windshield device for a saddle-ride type vehicle equipped with a windshield portion (80) which is provided to be adjustable in height and slant about a shaft (88, 188, 388) arranged to be directed in a vehicle width direction, according to claims 1 and 8.

The windshield portion (80) is mounted through a link member (82, 382) extending from the shaft (88, 188, 388), and the link member (82, 382) is switched between a movable state and a fixed state upon taking in and out a gear (130, 230L, 230R, 450) in the vehicle width direction, the gear (130, 230L, 230R, 450) being provided on the shaft (88, 188, 388) and fixing the link member (82, 382).

According to the present invention, the windshield portion is mounted through the link member extending from the shaft, and the link member is switched between the movable state and the fixed state upon taking in and out a gear in the vehicle width direction, the gear being provided on the shaft and fixing the link member. Thus, by taking the gear fixing the link member in and out in the vehicle width direction, the movable state and the fixed state of the link member can be switched, and thus, the link member can be made to be of a movable type in a compact configuration. Accordingly, the windshield device can be made to be of a movable type as well as to be downsized.

Furthermore, in the present invention, the shaft (88, 188) is provided at either one of outer ends in the vehicle width direction with a pressured portion (88a, 188a) for moving the shaft (88, 188) in an axial direction.

According to the present invention, since the shaft is provided at either one of the outer ends in the vehicle width direction with the pressured portion for moving the shaft in an axial direction, it is possible to easily operate the pressured portion at the outer end of the shaft from a lateral side of the vehicle, so that the position of the windshield device is easy to adjust.

Furthermore, in the present invention, the saddle-ride type vehicle is equipped with a side kickstand (75) which enables the saddle-ride type vehicle to be parked in the state slanted toward left, the outer end of the shaft (88) is provided with a lever (134) for pressuring the pressured portion (88a), and the lever (134) and the pressured portion (88a) are provided at the left end of the shaft (88).

According to the present invention, the lever for pressuring the pressured portion, and the pressured portion are provided at the left end of the shaft. Thus, in the state of a parking with the side kickstand, the movable state of the windshield device can be switched by the operation of the lever arranged on the left side being the side toward which the saddle-ride type vehicle is slanted, and hence, the operability is excellent.

Furthermore, in the present invention, the gear (130, 230L, 230R) is urged by an elastic member (133, 233) in an opposite direction to the direction pressured at the pressured portion (88a, 188a), and the gear (130, 230L, 230R) is formed in a taper shape tapered off in the direction urged by the elastic member (133, 233) .

According to the present invention, the gear is urged by the elastic member in the opposite direction to the direction pressured at the pressured portion, and the gear is formed in a taper shape tapered off in the direction urged by the elastic member. Thus, a looseness can be decreased by the close contact of the gear with the rink member side, and the gear can be guided by a taper shape, so that it is possible to engage the gear smoothly with the link member side.

Furthermore, in the present invention, the link member (82) is provided as a pair, the pair of the link members (82) being provided on a lower-front side and an upper-rear side, and the pressured portion (88a, 188a) is provided on the link member (84, 184) of the upper-rear side.

According to the present invention, the link member is provided as the pair, the pair of the link members being provided on a lower-front side and an upper-rear side, and the pressured portion is provided on the link member of the upper-rear side. Thus, the pressured portion becomes close to the position of the rider, so that the pressured portion can be operated easily.

Furthermore, in the present invention, the gear (130) is provided on the link member (84) of the upper-rear side, and on the right side being a side opposite to the pressured portion (88a) .

According to the present invention, since the gear is provided on the link member of the upper-rear side, and on the right side being a side opposite to the pressured portion, the pressured portion and the gear can be provided to be distributed on the right and left, so that the space can be utilized effectively to realize the compactification.

Furthermore, in the present invention, the link member (82) is provided as a pair, the link member (82) being provided on a lower-front side and an upper-rear side, and the gears (230L, 230R) are provided at the left end and the right end of the link member (184) of the upper-rear side.

According to the present invention, since the link member is provided as the pair, the pair of the link members being provided on the lower-front side and the upper-rear side, and the gears are provided at the left end and the right end of the link member of the upper-rear side, the pivot movement of the link member can be restricted by the two right and left gears, so that the link member can be fixed strongly.

Furthermore, in the present invention, the gear (450) is movably supported in an axial direction on the shaft (88) and the shaft (388) is provided at either one of outer ends in the vehicle width direction with a handle member (451) for holding the gear (450) .

According to the present invention, the gear is moved in the axial direction from the lateral side of the vehicle through the handle member which is at the outer end of the shaft, and this makes it possible to switch the link member between a movable state and a fixed state, so that the position of the windshield device is easy to adjust.

Furthermore, in the present invention, the shaft (388) is provided with a lever member (452) for pressuring the gear (450) in the vehicle width direction to bring the link member (382) into the fixed state.

According to the present invention, since the shaft is provided with a lever member for pressuring the gear in the vehicle width direction to bring the link member into the fixed state, it is possible to place the link member in the fixed state by causing the lever member to pressure the gear.

Furthermore, in the present invention, an urging member (456) urging the shaft (388) is provided to pressure the gear (450) by the lever member (452).

According to the present invention, since the urging member urging the shaft is provided to pressure the gear by the lever member, the lever member is held to be abutted on the gear side by the urging force of the urging member, so that it is possible to prevent a looseness from arising.

Furthermore, in the present invention, the lever member (452) pressures the gear (450) through a spring member (453) provided between the lever member (452) and the handle member (451) .

According to the present invention, since the lever member pressures the gear through the spring member, the state in which the gear meshes with the link member can be kept by a simple configuration relying on a pressuring fore of the spring member. Further, since the lever member and the handle member can be held pressured by the spring member, it is possible to restrain a looseness from arising.

Furthermore, in the present invention, the pivot operation of the lever member (452) makes a distance between the lever member (452) and the handle member (451) long and makes an urging force of the spring member (453) small.

According to the present invention, the pivot operation of the lever member makes the distance between the lever member and the handle member long and makes the urging force of the spring member small. Thus, when the lever member is pivotally operated, the urging force of the spring member can be made to be small, and this make it possible to move the handle member against the urging force of the spring member. That is, there can be realized a configuration that makes the gear movable in connection with the pivot operation of the lever member.

Furthermore, in the present invention, the lever member (452) pressures the handle member (451) through a collar (454) provided between the lever member (452) and the handle member (451), the spring member (453) is provided in a compressed state between the collar (454) and the handle member (451), and upon pivotally operating the lever member (452), the distance between the lever member (452) and the handle member (451) becomes long, and the collar (454) is separated from the handle member (451) by being pressured by the spring member (453).

According to the present invention, the lever member pressures the handle member through the collar, the spring member is provided in a compressed state between the collar and the handle member, and upon pivotally operating the lever member, the distance between the lever member and the handle member becomes long, and the collar is separated from the handle member by being pressured by the spring member. Thus, it is possible to keep the handle member pressured strongly through the collar, and at the same time, to separate the collar from the handle member by the operation of the lever member, and it is also possible to move the gear together with the handle member by an amount corresponding to the separation.

Furthermore, in the present invention, the saddle-ride type vehicle is equipped with a side kickstand (75) that enables the saddle-ride type vehicle to be parked in a state slanted toward the left side, and the lever member (452) is provided at the left end of the shaft (388).

According to the present invention, in a parked state with the side kickstand, the movable state of the windshield device can be switched by the operation of the lever member which is arranged on the left side being the side toward which the saddle-ride type vehicle is slanted, so that the operability is excellent.

Furthermore, in the present invention, the link member (382) is provided as a pair, the pair of link members (382) being provided on a lower-front side and an upper-rear side, and the handle member (451) is provided on a link member (384) of the upper-rear side.

According to the present invention, since the handle member is provided on the link member of the upper-rear side, the handle member becomes close to the position of the rider, and thus, the handle member can be operated easily.

Furthermore, in the present invention, the gear (450) and the handle member (451) are provided on the same side as the lever member (452) with respect to the right and left of the link member (384) of the upper-rear side.

According to the present invention, since the gear and the handle member are provided on the same side as the lever member with respect to the right and left, it is possible to successively operate the lever member and the handle member whose mutual positions are close, and thus, the operability is excellent.

Furthermore, in the present invention, the windshield portion (80) is manually adjustable to plural stepped positions.

According to the present invention, since the windshield portion is manually adjustable to the plural stepped positions, parts that automate the windshield portion are not required, and thus, the windshield device can be configured to be downsized.

Furthermore, in the present invention, a base member (81, 381) supporting the shaft (88, 188, 388) is equipped, and the gear (130, 230L, 230R, 450) is engaged with the link member (82, 384) and the base member (81, 381), in the fixed state.

According to the present invention, the base member supporting the shaft is equipped, and the gear is engaged with the link member and the base member, in the fixed state. Thus, the link member can be fixed to the base member through the gear, so that the pivot position of the link member can be fixed in a simple construction.

### [Advantageous Effects of Invention]

In the windshield device for the saddle-ride type vehicle according to the present invention, the windshield device can be made to be of a movable type and at the same time, can be downsized.

Further, the position of the windshield device is easy to adjust by the pressured portion at the outer end of the shaft.

Further, in the parked state with the side kickstand, the movable state of the windshield device can easily be switched by the operation of the lever.

Furthermore, it is possible to engage the gear smoothly with the link member side along a taper shape.

Further, the pressured portion close to the rider can be operated easily.

Further, the pressured portion and the gear are distributed at the right and left, so that a compact configuration can be realized.

Further, the link member can be fixed strongly by two right and left gears.

Furthermore, because of being a manual type, the windshield device can be configured to be downsized.

Further, the gear enables the link member to be fixed to the base member in a simple and compact configuration.

Further, the link member can be switched between the movable state and the fixed state by moving the gear in the axial direction through the handle member, and thus, the position of the windshield device is easy to adjust.

Further, the gear can be pressured by the lever member to bring the link member into the fixed state.

Further, the urging force of the urging member can prevent a looseness from arising.

Furthermore, the pressuring force of the spring member can keep the gear in a meshing state with the link member and at the same time, restricts a looseness from arising.

Further, when the lever member is pivotally operated, it becomes possible to make the urging force of the spring member small and to move the handle member against the urging force of the spring member.

Further, it is possible to keep the handle member pressured strongly through the collar and to separate the collar from the handle device by the operation of the lever member.

In the parked state with the side kickstand, the movable state of the windshield device can easily be adjusted by the operation of the lever member.

Further, the handle member close to the position of the rider can be operated easily.

Further, the lever member and the handle member whose mutual positions are close can be operated successively.

### [Brief Description of Drawings]

[FIG. 1] FIG. 1 is a right side view of a motorcycle according to a first embodiment of the present invention.
[FIG. 2] FIG. 2 is a plan view of the motorcycle as viewed from above.
[FIG. 3] FIG. 3 is a perspective view of a windshield device.
[FIG. 4] FIG. 4 is a left side view of the windshield device and is a view showing the state in which a windscreen is at the lowest position.
[FIG. 5] FIG. 5 is a left side view of the windshield device and is a view showing the state in which the windscreen is at the highest position.
[FIG. 6] FIG. 6 is a perspective view of a base member.
[FIG. 7] FIG. 7 is a perspective view wherein a lower link is viewed from the front side.
[FIG. 8] FIG. 8 is an VIII-VIII sectional view in FIG. 4.
[FIG. 9] FIG. 9 is a perspective view of an upper link as viewed from the front side.
[FIG. 10] FIG. 10 is a perspective view of a screen bracket.
[FIG. 11] FIG. 11 is an XI-XI sectional view in FIG. 4.
[FIG. 12] FIG. 12 is an XI-XI sectional view in FIG. 4.
[FIG. 13] FIG. 13 is a perspective view of a gear.
[FIG. 14] FIG. 14 is an exploded perspective view of an upper shaft insertion through portion and the gear in a state with a cover member detached.
[FIG. 15] FIG. 15 is a side view in which the peripheral portion of the upper shaft insertion through portion on the left side is viewed in the state of a lever detached.
[FIG. 16a] FIG. 16a is a XVI-XVI sectional view in FIG. 11 and is a sectional view showing the engaging state of gears.
[FIG. 16b] FIG. 16b is a XVI-XVI sectional view in FIG. 12 and is a sectional view showing the engaging state of gears.
[FIG. 17] FIG. 17 is a side view showing the flow of a travelling air along a windscreen.
[FIG. 18] FIG. 18 is an XI-XI sectional view in FIG. 4 in a second embodiment.
[FIG. 19] FIG. 19 is an XI-XI sectional view in FIG. 4 in the second embodiment.
[FIG. 20] FIG. 20 is a left side view of a windshield device in a third embodiment.
[FIG. 21] FIG. 21 is an exploded perspective view of a base member and parts around the base member.
[FIG. 22] FIG. 22 is a perspective view in which the upper link is viewed from the front side.
[FIG. 23] FIG. 23 is a XXIII-XXIII sectional view in FIG. 20.
[FIG. 24] FIG. 24 is a view showing a state to which a lock mechanism has changed from the state of FIG. 23 to a "lock release standby state."
[FIG. 25] FIG. 25 is a XXV-XXV sectional view in FIG. 20.
[FIG. 26] FIG. 26 is a XXVI-XXVI sectional view in FIG. 23.
[FIG. 27] FIG. 27 is a view showing a state to which the lock mechanism has changed from the state of FIG. 24 to a "lock release state."

### [Embodiments for Implementing the Invention]

Hereinafter, embodiments according to the present invention will be described with reference to the drawings. Incidentally, throughout the description, the representation of directions such as front, rear, right, left and up and down are regarded as the same as those given to a body unless indicated otherwise. Further, in each drawing, symbol FR indicates the front side of the body, symbol UP indicates the upper side of the body and symbol LH indicates the left side of the body. Further, in the drawings, the right side of the body is indicated by symbol RH on occasion.

### [First Embodiment]

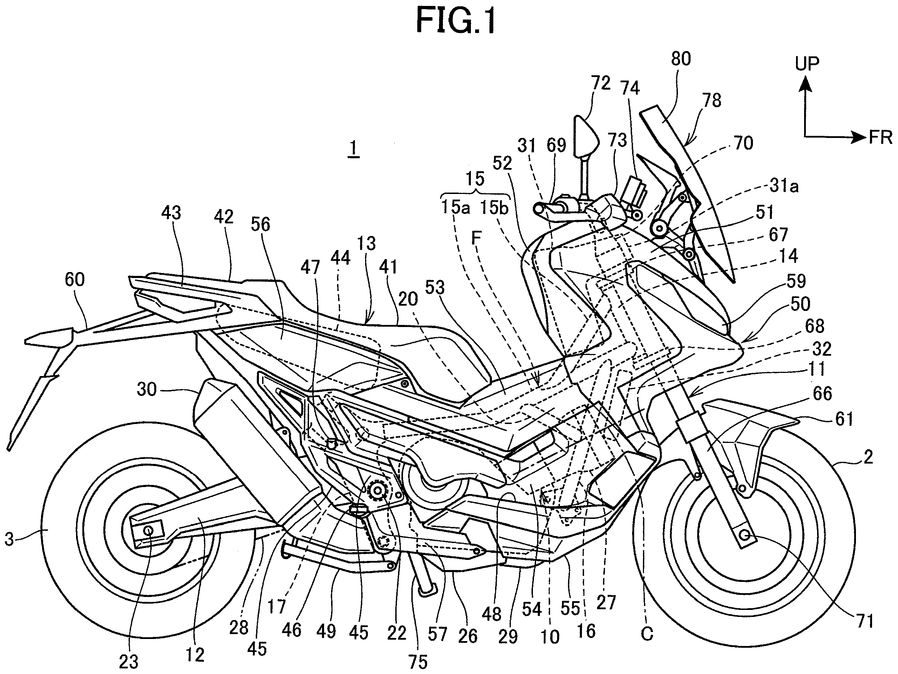

FIG. 1 is a right side view of a motorcycle according to a first embodiment of the present invention. Hereinafter, the right side view shows those only at the right side of those provided as a pair at the right and left.

The motorcycle 1 is a vehicle wherein an engine 10 as a power unit is mounted on a body frame F, wherein a steering system 11 that steerably supports a front wheel 2 is steerably supported at a front end of the body frame F, and wherein a swing arm 12 that supports a rear wheel 3 is provided at a rear side of the body frame F. The motorcycle 1 is a saddle-ride type vehicle in which an occupant seat 13 enabling an occupant to sit astride is provided above the rear portion of the body frame F.

The body frame F is equipped with a head pipe 14 provided at a front end, a pair of right and left main frames 15, 15 extending rearwardly and downward from a rear portion of the head pipe 14, a pair of right and left down frames 16, 16 extending rearwardly and downward from front end portions of the main frames 15, 15, a pair of right and left pivot frames 17, 17 extending downward from rear ends of the main frames 15, 15, and a pair of right and left rear frames (not shown) extending rearwardly upward from upper portions of the pivot frames 17, 17 to a rear end portion of the vehicle.

Each main frame 15 is equipped with a main frame body portion 15a extending rearwardly and downward from a lower portion of the head pipe 14 at a relatively gentle slant and a reinforcing frame 15b coupling an upper portion of the head pipe 14 to a front portion of the main frame body portion 15a. Further, the body frame F is equipped with a pair of right and left coupling frames 20, 20 that couple intermediate portions of the main frame body portions 15a, 15a to the down frames 16, 16.

The swing arm 12 is pivotally supported at a front end portion by a pivot shaft 22 that couples the right and left pivot frames 17, 17 in the vehicle width direction, and the swing arm swings upward and downward about the pivot shaft 22. The rear wheel 3 is pivotally supported on a rear wheel axle 23 inserted into a rear end portion of the swing arm 12.

The swing arm 12 is coupled to a rear portion of the body frame F through a rear suspension (not shown).

The engine 10 is mounted ahead of the pivot frames 17, 17 to be suspended from the body frame F.

The engine 10 is equipped with a crankcase 26 that supports a crankshaft (not shown) extending in the vehicle width direction, and a cylinder portion 27 extending forwardly upward from a front portion of the crankcase 26. The crankcase 26 resides under rear portions of the main frames 15, 15. The cylinder portion 27 extends forwardly upward along the main frames 15, 15 and has its front portion located between the right and left down frames 16, 16 and between the right and left coupling frames 20, 20.

The engine 10 is an engine slanted forward so that the cylinder axis C of the cylinder portion 27 comes close to the horizontal side rather than the vertical side, and a space is secured over the engine 10.

An output power of the engine 10 is transmitted to the rear wheel 3 through a chain 28 wound between an output shaft (not shown) of the engine 10 and the rear wheel 3.

An exhaust pipe 29 of the engine is drawn out downward from the cylinder head of the cylinder portion 27, the exhaust pipe 29 of the engine is extended rearward to pass under the engine 10, and the exhaust pipe 29 of the engine is connected to a muffler 30 on the right side of the swing arm 12.

An air cleaner case 31 that purifies air supplied to the engine 10 is placed over front portions of the main frames 15, 15 and behind the head pipe 14. An intake duct 31a is provided at a front end portion of an upper portion of the air cleaner case 31. The air passing through the air cleaner case 31 is regulated by a throttle body (not shown) in flow rate and the air flows into cylinders in the cylinder portion 27. A radiator 32 for the engine 10 is arranged under the head pipe 14 and ahead of the cylinder portion 27.

The occupant seat 13 is integrally equipped with a front seat 41 for a rider and a rear seat 42 for a passenger (pillion passenger), the rear seat 42 being higher by one step than the front seat 41.

The front seat 41 is disposed over rear portions of the main frames 15, 15 and over the pivot frames 17, 17. Further, the front seat 41 is located over a rear portion of the crankcase 26.

The rear seat 42 is arranged over a rear portion of the above-mentioned rear frames. Further, the rear seat 42 is located over a rear portion of the muffler 30 and over a front portion of the rear wheel 3. On the right and left sides of the rear seat 42, there are provided grip portions 43, 43 that enables the passenger seated on the rear seat 42 to grip, respectively.

A fuel tank 44 is disposed under the front seat 41 and the rear seat 42.

A pair of right and left plate-like step holders 45, 45 is provided on outer side surfaces of the pivot frames 17, 17. A pair of right and left sub steps 46, 46 for the rider and a pair of right and left passenger steps 47, 47 for the passenger are supported respectively by the step holders 45, 45. A pair of right and left main steps 48 48 for the rider is provided under a front portion of the front seat 41.

The main stand 49 is coupled to a lower portion of the pivot frames 17, 17.

A foldable side kickstand 75 is provided at a lower portion of a left portion of the body frame F. With the motorcycle 1 parked by the use of the side kickstand 75, the motorcycle 1 becomes the state slanted toward the side on which the side kickstand resides in the vehicle width direction, that is, toward the left side. With the motorcycle 1 parked by the use of the side kickstand 75, the motorcycle 1 descends on the left portion and ascends on the right portion.

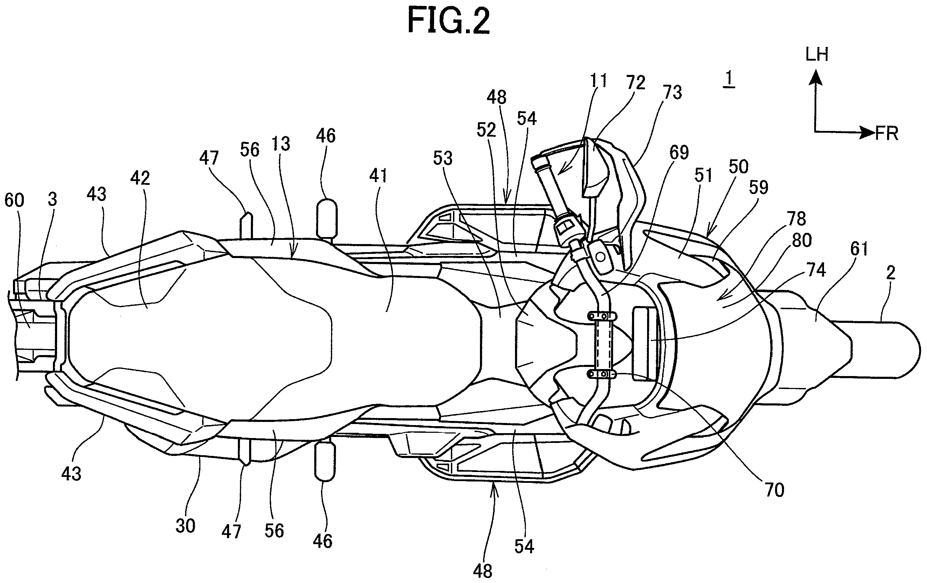

FIG. 2 is a plan view of the motorcycle 1 as viewed from above. Incidentally, FIG. 2 does not show the configuration on the right end portion side of a handlebar 69 referred to later.

As shown in FIG. 1 and FIG. 2, the motorcycle 1 is equipped with a body cover 50 for covering the body. The body cover 50 is equipped with a front cover 51, a rear face cover 52, seat under cover 53, and a pair of right and left intermediate side covers 54, 54a. The front cover 51 covers the head pipe 14 and an upper portion of the steering system 11 from front and from right and left sides. The rear face cover 52 is coupled to a rear edge of the front cover 51, the rear face cover 52 covering the head pipe 14 and the upper portion of the steering system 11 from rear. The seat under cover 53 covers the main frames 15, 15 from above and from right and left sides, at the rear of a lower portion of the front cover 51. The pair of right and left intermediate side covers 54, 54 cover the engine 10 and a rear portion of the body frame F from lateral sides, under the seat under cover 53.

Further, the body cover 50 is equipped with an under cover 55, a pair of right and left rear covers 56, 56, and a pair of right and left frame covers 57, 57. The under cover 55 covers the engine 10 from below. The pair of right and left rear covers 56, 56 cover a lower portion of the occupant seat 13 from lateral sides at a rear portion of the seat under cover 53. The pair of right and left frame covers 57, 57 cover a lower portion at a rear portion of the engine 10 and lower portions of the pivot frames 17, 17 from lateral sides.

The front cover 51 is provided at a front portion with a windshield device 78 which is equipped with a plate-like windscreen 80 (windshield portion) extending in a vertical direction. A headlight 59 is provided on a front face of the front cover 51.

The motorcycle 1 is equipped with a rear fender 60 covering the rear wheel 3 from above and a front fender 61 covering the front wheel 2 from above.

The steering system 11 is equipped with a steering shaft (not shown), a pair of right and left front forks 66, 66, a top bridge 67, and a bottom bridge 68. The steering shaft pivotably supports in the head pipe 14. The pair of right and left front forks 66, 66 is arranged on both of right and left sides of the front wheel 2 and supports the front wheel 2. The top bridge 67 is fixed to an upper end of the aforementioned steering shaft and couples the right and left front forks 66, 66. The bottom bridge 68 is fixed to a lower end of the aforementioned steering shaft and couples the right and left front forks 66, 66. Further, the steering system 11 is equipped with a handlebar 69 as a steering provided over the front forks 66, 66 and a handlebar holder 70 fixing the handlebar 69 to the front forks 66, 66.

The front wheel 2 is pivotably supported on a front wheel axle 71 bridged between lower ends of the front forks 66, 66.

The handlebar 69 is provided with a pair of right and left rearview mirrors 72, 72 and a pair of right and left knuckle guards 73, 73. Further, a navigation system 74 is provided ahead of the handlebar 69 and behind the windshield device 78.

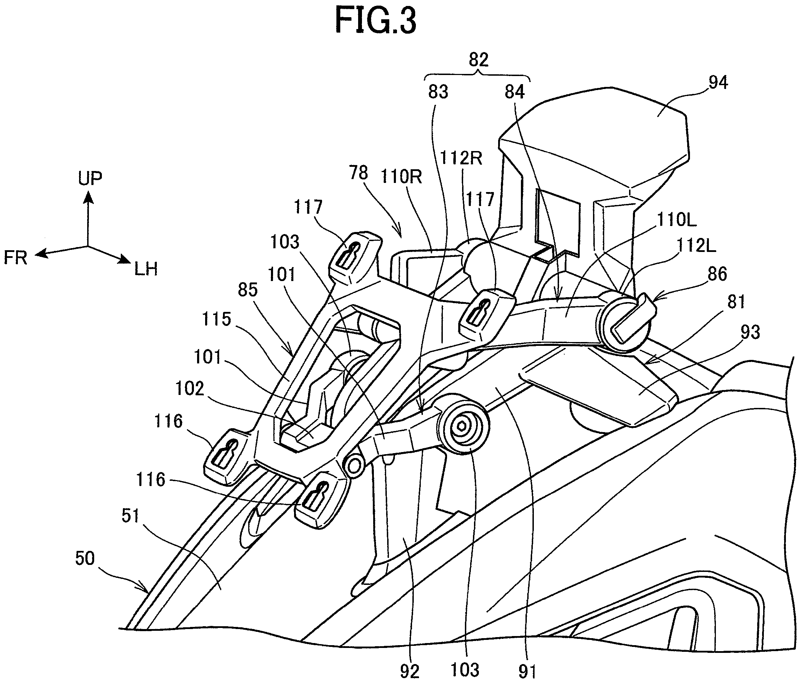

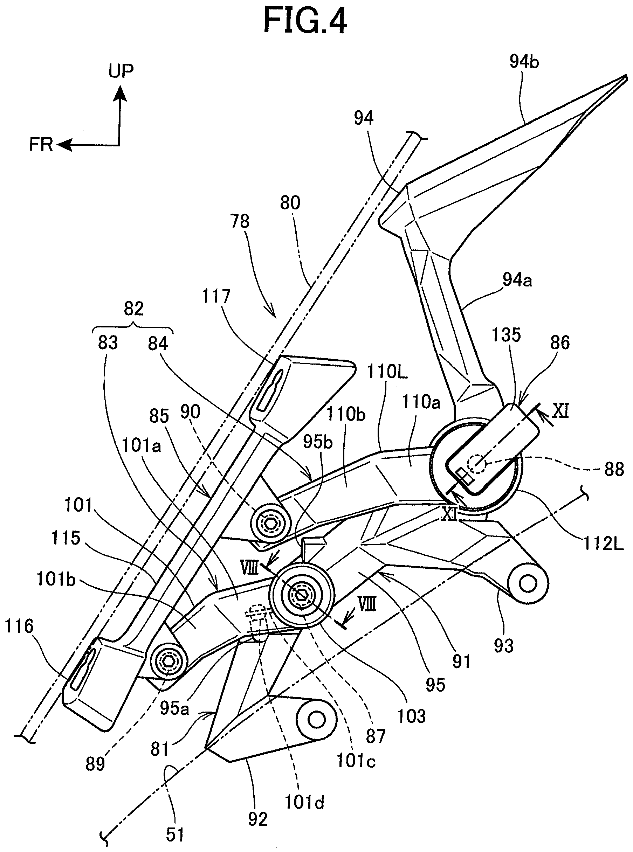

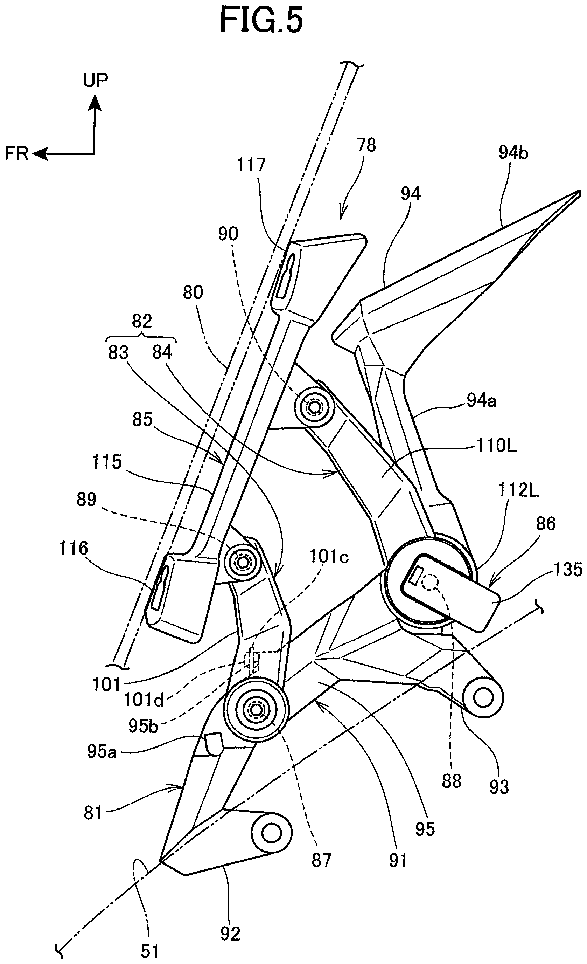

FIG. 3 is a perspective view of the windshield device 78. FIG. 4 and FIG. 5 are left side views of the windshield device 78. In FIG. 3, the windscreen 80 is not shown. Further, the windshield device 78 is configured so that the position of the windscreen 80 is vertically adjustable, and FIG. 4 shows a "low position" state while FIG. 5 shows a "high position" state.

Referring to FIG. 3 to FIG. 5, the windshield device 78 is provided on an upper surface of the front cover 51 slanted rearwardly upward and is located at the center in the vehicle width direction. The windshield device 78 is equipped with a base member 81 attached to the front cover 51 as the body, a link member 82 pivotably supported on the base member 81, a screen bracket 85 supported by the link member 82, the aforementioned windscreen 80 supported by the screen bracket 85, and a lock mechanism 86 that restricts the pivot position of the link member 82.

The link member 82 is equipped with a lower link 83 and an upper link 84 (link member of an upper-rear side). The lower link 83 is pivotably supported by the base member 81 and extends forward. The upper link 84 is located behind and above the lower link 83. The upper link 84 is pivotably supported by the base member 81, and extends forward.

Further, the windshield device 78 is equipped with a lower shaft 87, an upper shaft 88 (shaft), a lower pivot shaft 89, and an upper pivot shaft 90. The lower shaft 87 couples the lower link 83 to the base member 81, the upper shaft 88 (shaft) couples the upper link 84 to the base member 81. The lower pivot shaft 89 couples the screen bracket 85 to the lower link 83. The upper pivot shaft 90 couples the screen bracket 85 to the upper link 84. The lower shaft 87, the upper shaft 88, the lower pivot shaft 89, and the upper pivot shaft 90 are shafts each extending in a straight line in the vehicle width direction and are mutually in parallel.

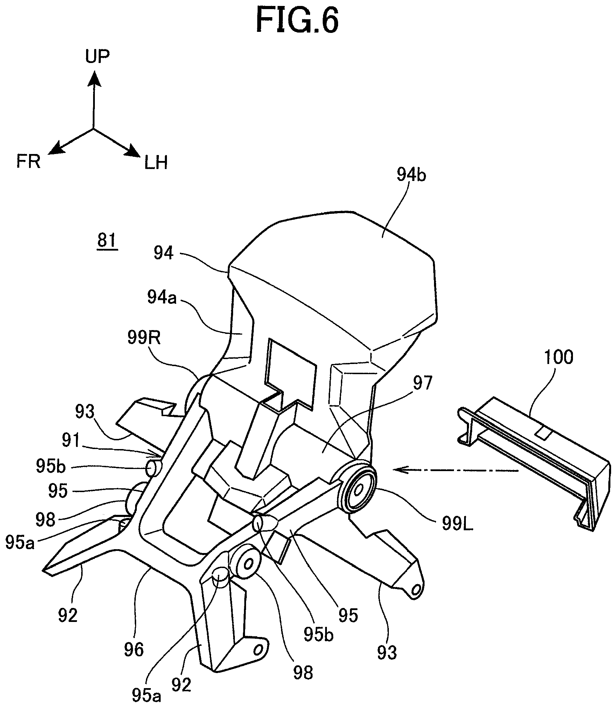

FIG. 6 is a perspective view of the base member 81.

Referring to FIG. 3 through Fig. 6, the base member 81 is arranged to be slanted rearwardly upward as if it goes along the upper surface of the front cover 51. The base member 81 is equipped with a base body portion 91, a pair of right and left front stay portions 92, 92, a pair of right and left rear stay portions 93, 93, and an upward extending portion 94. The base body portion 91 supports the lower link 83 and the upper link 84. The pair of right and left front stay portions 92, 92 extends downward from both side portions at a lower end portion (front end portion) of the base body portion 91. The pair of right and left rear stay portions 93, 93 extends downward from both side portions at an upper end portion (rear end portion) of the base body portion 91. The upward extending portion 94 extends upward from an upper end portion of the base body portion 91.

The base body portion 91 is equipped with a pair of right and left side plate portions 95, 95 extending in a front-rear direction along an upper surface of the front cover 51, a front end coupling portion 96 tying front end portions of the side plate portions 95, 95 in the vehicle width direction, and a rear end coupling portion 97 tying rear end portions of the side plate portions 95, 95 in the vehicle width direction, and the base body portion 91 is formed in a frame shape.

At the front end portion of the base body portion 91, that is, at the front end portions of the right and left side plate portions, a pair of right and left lower shaft supporting hole portions 98, 98 is provided, and the lower shaft 87 is inserted is into the pair of right and left lower shaft supporting hole portions 98, 98. The lower shaft supporting hole portions 98, 98 are located behind the front end coupling portion 96.

At the rear end portion of the base body portion 91, that is, at the rear end portions of the right and left side plate portions 95, 95, a pair of left and right upper shaft supporting hole portions 99L, 99R is provided, and the upper shaft 88 is inserted into the pair of left and right upper shaft supporting hole portions 99L, 99R. The upper shaft supporting hole portions 99L, 99R are provided at both end portions of the rear end coupling portion 97 in the vehicle width direction. The upper shaft supporting hole portions 99L, 99R are located behind and above the lower shaft supporting hole portions 98, 98.

The right and left side plate portions 95, 95 are formed to be slanted so that the mutual space in the vehicle width direction becomes larger on the rear end side. Thus, the space between the left and right upper shaft supporting hole portions 99L, 99R is larger than the space between the right and left lower shaft supporting hole portions 98, 98.

The base member 81 is fitted on the upper surface of the front cover 51 at the front stay portions 92,92 and the rear stay portions 93,93 and the base member 81 is fixed to the body by fixtures (not shown) that pierce through lower end portions of the front stay portions 92,92 and the rear stay portions 93,93.

The upward extending portion 94 of the base member 81 is equipped with a vertical wall portion 94a extending upward from the base body portion 91 and an upper wall portion 94b extending rearward from an upper end of the vertical wall portion 94a. The windscreen 80 extends rearwardly upward across the upper side of the upper wall portion 94b.

A rear end of the base member 81 has attached thereto a rear portion cover 100 covering the rear end coupling portion 97 from behind. Incidentally, the rear portion cover 100 is a decorative cover, and there may be taken a configuration that the rear portion cover 100 is not provided.

Further, the base member 81 is equipped with lower stopper portions 95a, 95a and upper stopper portions 95b, 95b that restrict the pivot position of the lower link 83. The lower stopper portions 95a, 95a are provided at front end portions of the side plate portions 95, 95 on the front lower side of the lower shaft supporting hole portions 98, 98. The upper stopper portions 95b, 95b are provided at front portions of the side plate portions 95, 95 on the rear upper side of the lower shaft supporting hole portions 98, 98.

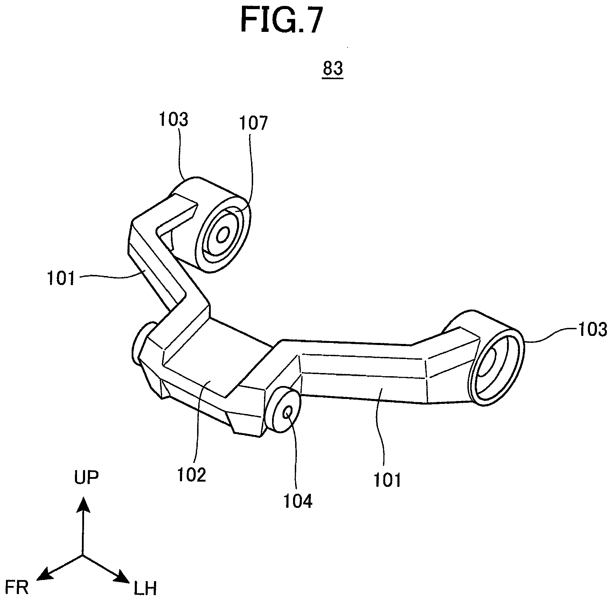

FIG. 7 is a perspective view wherein the lower link 83 is viewed from the front side.

Referring to FIG. 3 through FIG. 7, the lower link 83 is equipped with a pair of right and left lower arm portions 101, 101 extending forward from the base member 81 side and a lower coupling portion 102 tying front end portions of the lower arm portions 101, 101 in the vehicle width direction.

The lower arm portions 101, 101 are respectively equipped at rear end portions with cylindrical lower shaft insertion through portions 103, 103 into which the lower shaft 87 is inserted. The lower arm portions 101, 101 are formed so that the mutual space becomes smaller as it goes from lower shaft insertion through portions 103, 103 to the lower coupling portion 102 side at the front end. Further, in a side view in the "low position" state of FIG. 4, the lower arm portions 101, 101 are equipped with horizontal portions 101a extending from the lower shaft insertion through portions 103, 103 forward and almost horizontally and slant portions 101b extending from the front ends of the horizontal portions 101a to be slanted forwardly downward.

The lower coupling portion 102 is formed with a lower pivot shaft supporting hole portion 104 pierced in the vehicle width direction, and the lower pivot shaft 89 is inserted into the lower pivot shaft supporting hole portion 104.

The lower arm portions 101, 101 are equipped on inner side surfaces with abutment portions 101c, 101c protruding inward in the vehicle width direction. Each abutment portion 101c is equipped with a rubber member 101d.

The lower link 83 is restricted from being pivoted downward when the rubber members 101d, 101d of the lower arm portions 101, 101 are brought into abutment on the lower stopper portions 95a, 95a of the base member 81. Further, the lower link 83 is restricted from being pivoted upward when the rubber members 101d, 101d of the lower arm portions 101, 101 are brought into abutment on the upper stopper portions 95b, 95b of the base member 81.

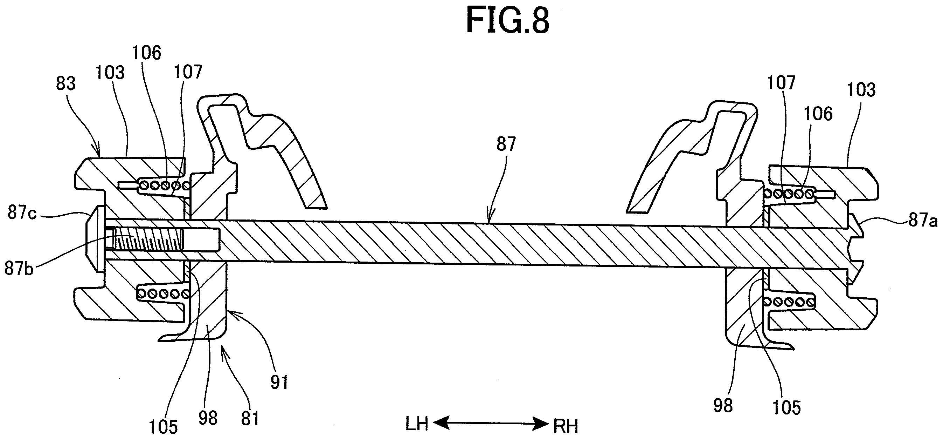

FIG. 8 is VIII-VIII sectional view in FIG. 4.

Referring to FIG. 4 through FIG. 8, the lower link 83 is arranged so that the right and left lower shaft insertion through portions 103, 103 overlap the lower shaft supporting hole portions 98, 98 of the base member 81 from the outer sides in the vehicle width direction, and the lower link 83 is pivotally supported on the lower shaft 87 with the lower shaft 87 inserted into the lower shaft insertion through portions 103, 103 and the lower shaft supporting hole portions 98, 98.

The lower shaft 87 is equipped at one end with a flange portion 87a being larger in diameter than the shaft portion. A bolt 87b is fastened into an inner peripheral portion at the other end of the lower shaft 87. The right and left lower shaft insertion through portions 103, 103 of the lower link 83 is prevented by the flange portion 87a and a head portion 87c of the bolt 87b from coming off the lower shaft 87 in the axial direction.

Washers 105, 105 are provided being inserted through the lower shaft 87 between the lower shaft insertion through portions 103, 103 and outer side surfaces of the lower shaft supporting hole portions 98, 98 of the base member 81. The washers 105, 105 are configured with, for example, a resin material being low in friction coefficient and reduces the friction during the pivot movement of the lower link 83.

Furthermore, coil springs 106, 106 are interposed between the lower shaft insertion through portions 103, 103 and the outer side surfaces of the lower shaft supporting hole portions 98, 98. The lower shaft insertion through portions 103, 103 are equipped with annular spring storage grooves 107, 107 that are provided coaxially with the lower shaft 87, and the coil springs 106,106 are stored in the spring storage grooves 107, 107.

The lower shaft insertion through portions 103, 103 of the lower link 83 are urged by the coil springs 106, 106 outward in the vehicle width direction to abut respectively on the flange portion 87a and the head portion 87c. Thus, the looseness in the vehicle width direction at the lower shaft insertion through portions 103, 103 can be reduced.

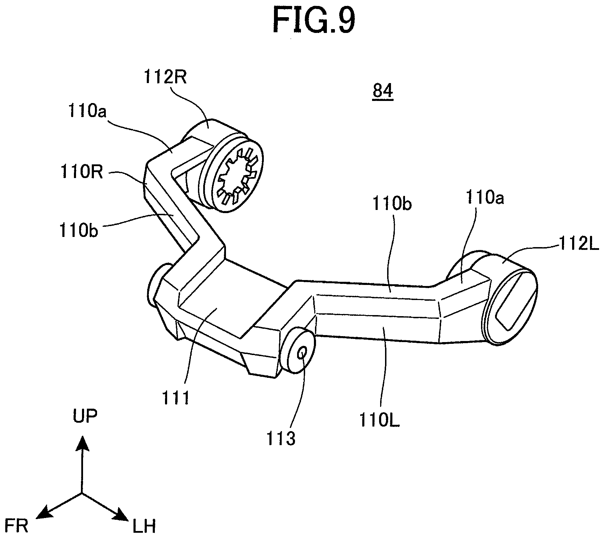

FIG. 9 is a perspective view of the upper link 84 as viewed from the front side.

Referring to FIG. 3 through FIG. 6 and FIG 9, the upper link 84 is equipped with a pair of right one side (right side) arm portion 110R and left other side (left side) arm portion 110L, and an upper coupling portion 111. The pair of one side arm portion 110R and other side arm portion 110L extend forward from the base member 81 side. The upper coupling portion 111 ties a front end portion of the one side arm portion 110R and a front end portion of the other side arm portion 110L in the vehicle width direction.

The one side arm portion 110R and the other side arm portion 110L are equipped at rear end portions with cylindrical upper shaft insertion through portions 112R, 112L into which the upper shaft 88 is inserted. The one side arm portion 110R and the other side arm portion 110L are formed so that the mutual space becomes smaller in the vehicle width direction as it goes from the upper shaft insertion through portions 112R, 112L toward the upper coupling portion 111 at the front end. Further, in the side view in the "low position" state of FIG. 4, the one side arm portion 110R and the other side arm portion 110L are equipped with horizontal portions 110a extending forward from the upper shaft insertion through portions 112R, 112L almost horizontally and slant portions 110b extending from front ends of the horizontal portions 110a to be slanted forwardly downward. In the side view, the one side arm portion 110R and the other side arm portion 110L are formed to be longer than the lower arm portions 101, 101.

The upper coupling portion 111 is formed with an upper pivot shaft supporting hole portion 113 pierced in the vehicle width direction, and the upper pivot shaft 90 is inserted into the upper pivot shaft supporting hole portion 113.

The upper link 84 is arranged so that the right and left upper shaft insertion through portions 112R, 112L overlap the upper shaft supporting hole portions 99L, 99R of the base member 81 from the outer sides in the vehicle width direction, and the upper link 84 is pivotally supported on the upper shaft 88 by inserting the upper shaft 88 into the upper shaft insertion through portion 112R, 112L and the upper shaft supporting hole portions 99L, 99R.

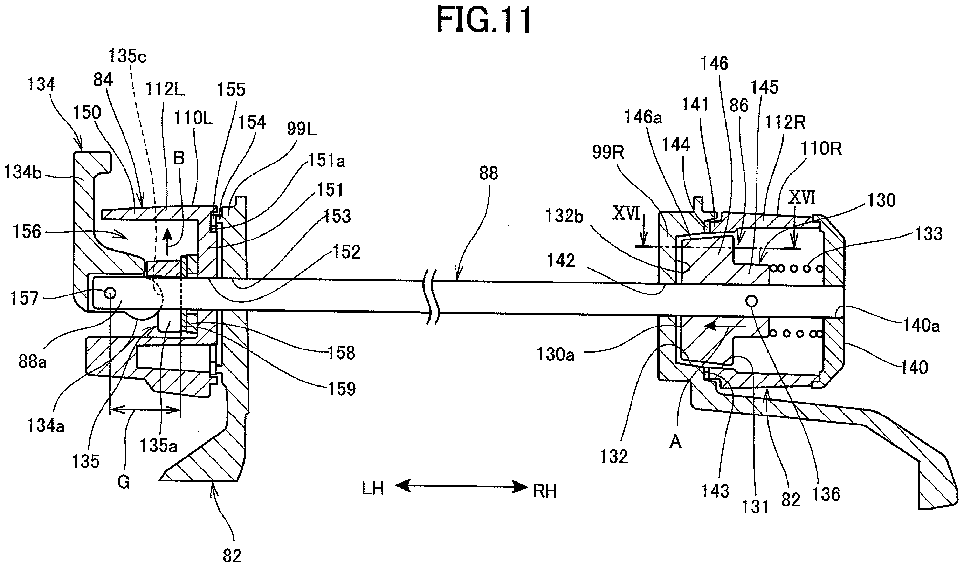

Further, the upper link 84 is provided with the aforementioned lock mechanism 86 (FIG. 11). The lock mechanism 86 will be described later.

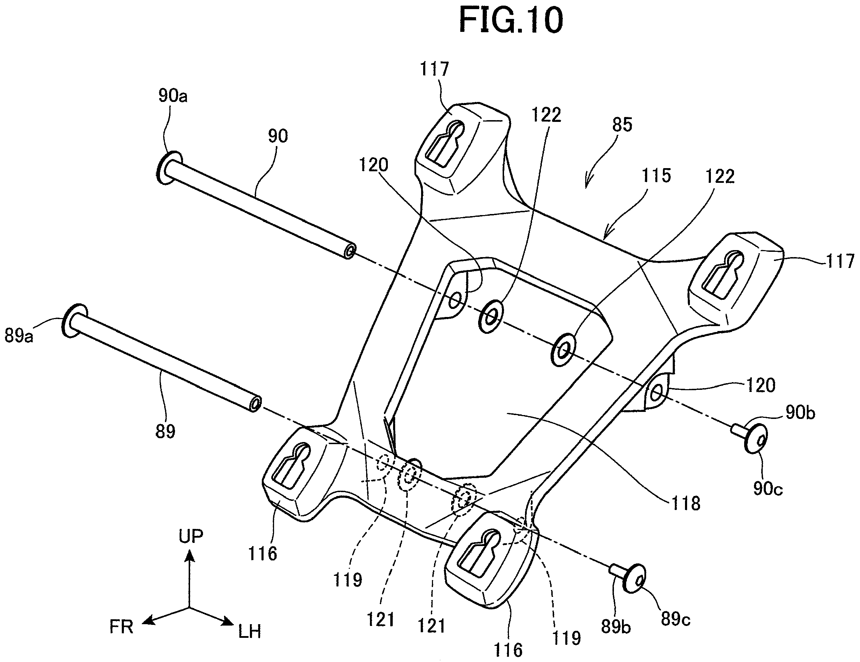

FIG. 10 is a perspective view of the screen bracket 85.

Referring to FIG. 3 through FIG. 5, FIG. 7, FIG. 9 and FIG 10, the screen bracket 85 is equipped with a plate-like bracket body portion 115 extending rearwardly upward in the side view, a pair of right and left lower screen fixing portions 116, 116 provided at opposite end portions in the vehicle width direction of a lower end portion of the bracket body portion 115, and a pair of right and left upper screen fixing portions 117, 117 provided at opposite end portions in the vehicle width direction of an upper end portion of the bracket body portion 115.

The bracket body portion 115 is equipped with a lightening hole 118 at a center and is formed in a frame shape. The screen bracket 85 is equipped with lower pivot shaft insertion through portions 119, 119 that protrude downward from a lower surface at a lower portion of the bracket body portion 115. The pair of right and left lower pivot shaft insertion through portions 119, 119 is provided at opposite end portions in the vehicle width direction of the bracket body portion 115, and the pair of right and left lower pivot shaft insertion through portions 119, 119 is located behind and above the lower screen fixing portions 116, 116.

Furthermore, the screen bracket 85 is equipped with upper pivot shaft insertion through portions 120, 120 that protrude downward from a lower surface at an upper portion of the bracket body portion 115. The pair of right and left upper pivot shaft insertion through portions 120, 120 is provided at opposite end portions in the vehicle width direction of the bracket body portion 115, and the pair of right and left upper pivot shaft insertion through portions 120, 120 is located at front and lower sides of the upper screen fixing portions 117, 117.

The screen bracket 85 is arranged so that the right and left lower pivot shaft insertion through portions 119, 119 overlap the lower pivot shaft supporting hole portion 104 of the lower link 83 from the outer sides in the vehicle width direction, and the screen bracket 85 is pivotally supported on the lower pivot shaft 89 by inserting the lower pivot shaft 89 into the lower pivot shaft insertion through portions 119, 119 and the lower pivot shaft supporting hole portion 104.

The lower pivot shaft 89 is provided at one end with a flange portion 89a being larger in diameter than a shaft portion. A bolt 89b is fastened into an inner peripheral portion at the other end of the lower pivot shaft 89. The right and left lower pivot shaft insertion through portions 119, 119 of the screen bracket 85 are prevented from coming off the lower pivot shaft 89 in the axial direction by the flange portion 89a and a head portion 89c of the bolt 89b.

Further, washers 121, 121 are provided being inserted through the lower pivot shaft 89 between the lower pivot shaft insertion through portions 119, 119 and the lower pivot shaft supporting hole portion 104 of the lower link 83. The washers 121, 121 are configured with, for example, a resin material being low in friction coefficient.

Further, the screen bracket 85 is arranged so that the right and left upper pivot shaft insertion through portions 120, 120 overlap the upper pivot shaft supporting hole portion 113 of the upper link 84 from the outer sides in the vehicle width direction, and the screen bracket 85 is pivotally supported on the upper pivot shaft 90 by inserting the upper pivot shaft 90 into the upper pivot shaft insertion through portions 120, 120 and the upper pivot shaft supporting hole portion 113.

The upper pivot shaft 90 is equipped at one end with a flange portion 90a being larger in diameter than a shaft portion. A bolt 90b is fastened into an inner peripheral portion at the other end of the upper pivot shaft 90. The right and left upper pivot shaft insertion through portions 120, 120 of the screen bracket 85 are prevented from coming off the upper pivot shaft 90 in the axial direction by the flange portion 90a and a head portion 90c of the bolt 90b.

Further, washers 122, 122 are provided being inserted through the upper pivot shaft 90 between the upper pivot shaft insertion through portions 120, 120 and the upper pivot shaft supporting hole portion 113 of the upper link 84. The washers 122, 122 are configured with, for example, a resin material being low in friction coefficient.

As shown in FIG. 1 and FIG. 2, the windscreen 80 is arranged to be slanted rearward rather than vertically in the side view, and the windscreen 80 is formed in a curved shape to form a protrusion forward at a center portion in the vehicle width direction, in the top view.

Referring to FIG. 4, FIG. 5 and FIG 10, the windscreen 80 is fixed to the screen bracket 85 by fixing fixed portions (not shown) on the backside to the lower screen fixing portions 116, 116 and the upper screen fixing portions 117, 117 of the screen bracket 85.

As shown in FIG. 4 and FIG. 5, the windshield device 78 is enabled to be set to three positions including a "low position" at which the windscreen 80 is located lowest, a "high position" at which the windscreen 80 is located highest, and an "intermediate position" between the "low position" and the "high position". Here, the "intermediate position" is not shown. At the "high position", the windscreen 80 is located higher than the "low position" state, and the slant of the windscreen 80 rises up beyond the "low position" state to come close to the vertical.

In the windshield device 78, the one side arm portion 110R and the other side arm portion 110L are formed to be longer than the lower arm portions 101, 101, and thus, when the upper link 84 and the lower link 83 are pivoted rearward, the screen bracket 85 is raised up forward, and the windscreen 80 is also raised up forward.

The position states of the "low position", the "intermediate position" and the "high position" of the windscreen 80 are realized by the lock mechanism 86 that restricts the pivot position of the upper link 84 to a designated position.

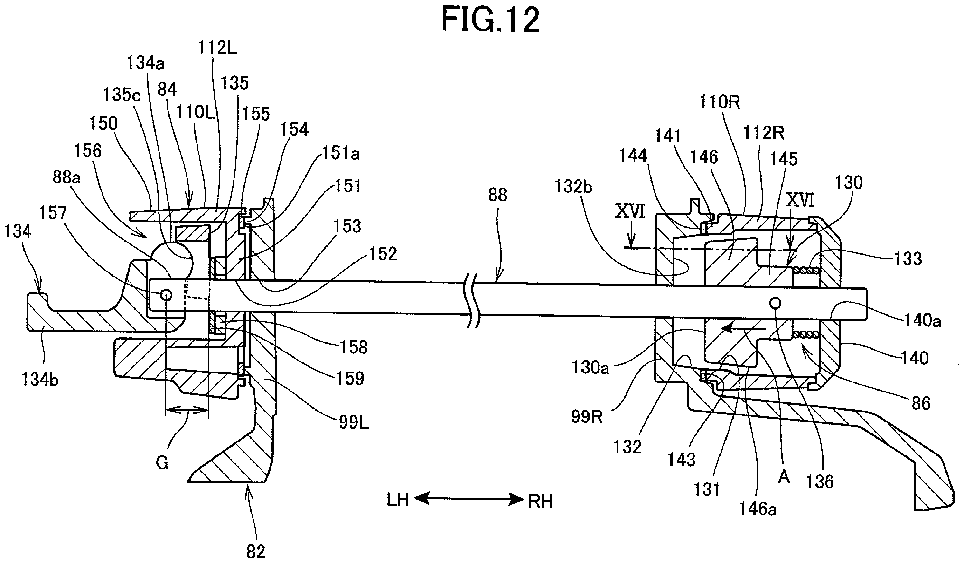

FIG. 11 and FIG. 12 are XI-XI sectional views in FIG. 4. Here, FIG. 11 shows the lock mechanism 86 in a "fixed state", while FIG. 12 shows the lock mechanism 86 in a "movable state". Here, the "fixed state" places the link member 82 in a pivotunable state, while the "movable state" places the link member 82 in a pivotable state.

Referring to FIG. 4, FIG. 9, FIG. 11 and FIG 12, the lock mechanism 86 is equipped with an upper shaft 88, a gear 130 fixed on the upper shaft 88, a link member side engaging portion 131 provided on the upper link 84 and engaged with the gear 130, a base member side engaging portion 132 provided on the base member 81 and engaged with the gear 130, and an elastic member 133 urging the gear 130 in the axial direction of the upper shaft 88.

Further, the lock mechanism 86 is equipped with a lever 134 for pressuring the upper shaft 88 in the axial direction and a receiving member 135 for receiving one end portion of the lever 134.

The gear 130 is arranged to be fitted on an end portion on one side of the upper shaft 88, and the gear 130 is fixed on the upper shaft 88 by a pin 136 inserted into the gear 130 and the upper shaft 88. The pin 136 is inserted in a direction perpendicular to the axis of the upper shaft 88. The gear 130 is unable to rotate relatively the upper shaft 88 and is unable to move the upper shaft 88 in the axial direction.

The gear 130 is urged by the urging force of the elastic member 133 to be moved toward the other side in the vehicle width direction (left side or in a direction indicated by the arrow of the urging direction A).

The upper shaft insertion through portion 112R on the one side arm portion 110R of the upper link 84 is formed in a cylindrical shape, and the upper shaft insertion through portion 112R extends in the vehicle width direction. A part of the gear 130 is received inside the upper shaft insertion through portion 112R.

An outer end portion in the vehicle width direction of the cylindrical upper shaft insertion through portion 112R has fixed thereto a plate-like cap member 140 closing an opening of the outer end portion. The cap member 140 is equipped at a center with a through hole 140a into which an end portion on one side of the upper shaft 88 is inserted.

An inner end portion 141 in the vehicle width direction of the cylindrical upper shaft insertion through portion 112R fits on an outer side surface of the upper shaft supporting hole portion 99R of the base member 81.

The upper shaft supporting hole portion 99R of the base member 81 has at a center a shaft hole 142 supporting the upper shaft 88, and the upper shaft supporting hole portion 99R is equipped at an outer side surface in the vehicle width direction with a guide portion 143 on which an inner end portion 141 of the upper shaft insertion through portion 112R fits. The guide portion 143 is a stepped portion formed in a round shape in a side view and is arranged coaxially with the shaft hole 142.

With the inner end portion 141 guided by the guide portion 143, the one side arm portion 110R is pivotable about the upper shaft 88. A washer 144 for reducing the friction in pivot movement is interposed between the inner end portion 141 and the guide portion 143.

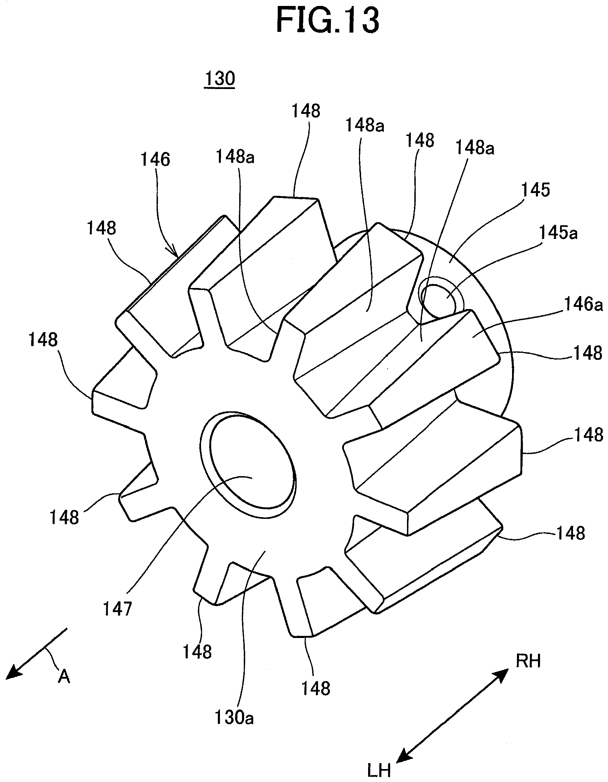

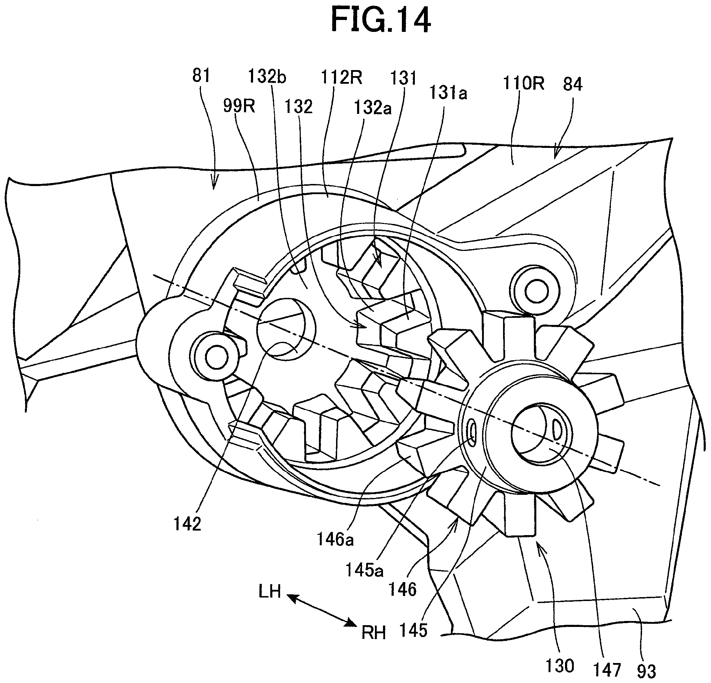

FIG. 13 is a perspective view of the gear 130. FIG. 14 is an exploded perspective view of the upper shaft insertion through portion 112R and the gear 130 in a state with the cap member 140 detached.

Referring to FIG. 11 through FIG. 14, the gear 130 is provided between the upper shaft supporting hole portion 99R of the base member 81 and the upper shaft insertion through portion 112R of the one side arm portion 110R.

The gear 130 is equipped with a fixed portion 145 into which the pin 136 is inserted, a tooth portion 146 being larger in diameter than the fixed portion 145, and a center hole 147 into which the upper shaft 88 is inserted.

The fixed portion 145 is equipped with a pin hole 145a into which the pin 136 is inserted.

As shown in FIG. 11 and FIG. 13, a tooth portion 146 of the gear 130 has the outer peripheral portion 146a whose diameter is formed in a taper shape which gradually becomes slender toward the urging direction A of the elastic member 133.

The tooth portion 146 is equipped with a plurality of teeth 148 arranged at regular intervals in the circumferential direction. Each tooth 148 is formed in a taper shape in which its plate thickness gradually becomes smaller toward the urging direction A of the elastic member 133. In detail, each tooth 148 has both faces in the plate thickness direction taken as slanted taper surfaces 148a, 148a. Further, the height of each tooth 148 gradually becomes low toward the urging direction A in dependence on the taper shape of the outer peripheral portion 146a.

The upper shaft insertion through portions 112R of the upper link 84 is equipped at an inner peripheral portion of the inner end portion 141 with the aforementioned link member side engaging portion 131 with which the gear 130 is engaged at the tooth portion 146. The link member side engaging portion 131 is provided with a plurality of groove portions 131a with which the respective teeth 148 are engaged, and the groove portions 131a are formed in a taper shape in correspondence to the shapes of the outer peripheral portion 146a and the taper surfaces 148a, 148a of the gear 130.

The aforementioned base member side engaging portion 132 of the base member 81 is a hole portion which is formed on the outer side surface of the upper shaft supporting hole portion 99R and around the shaft hole 142 at an inner side of the guide portion 143, and the base member side engaging portion 132 has at an inner peripheral portion a plurality of groove portions 132a engaged with the respective teeth 148 of the gear 130.

The base member side engaging portion 132 is equipped with a bottom portion 132b that receives a distal end surface 130a in the axial direction of the gear 130 fitted in the base member side engaging portion 132 from the outer side in the vehicle width direction. Further, the groove portions 132a are formed in a taper shape in correspondence to the shapes of the outer peripheral portion 146a and the taper surfaces 148a, 148a of the gear 130. The groove portions 132a of the base member side engaging portion 132 and the groove portions 131a of the link member side engaging portion 131 are continuous in the axial direction.

The elastic member 133 is a coil spring. The elastic member 133 is provided with a coil portion at an inner peripheral portion being inserted through a shaft end portion on one side of the upper shaft 88, and the elastic member 133 is arranged inside the upper shaft insertion through portion 112R with itself compressed between the fixed portion 145 of the gear 130 and the cap member 140.

The upper shaft 88 is supported slidably in the axial direction with respect to the base member 81 and the upper link 84, and the upper shaft 88 is urged through the gear 130 by the urging force of the elastic member 133 in the urging direction A.

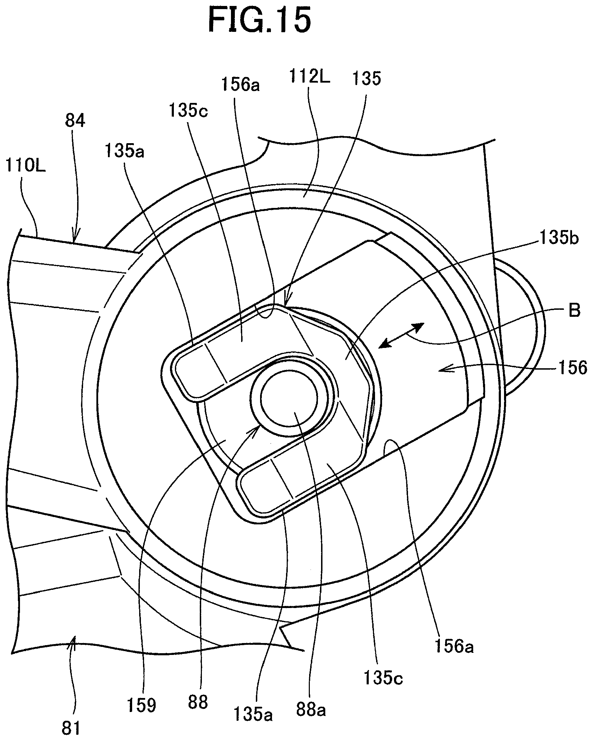

FIG. 15 is a side view in which the peripheral portion of the upper shaft insertion through portion 112L on the left side is viewed in the state with the lever 134 detached.

Referring to FIG. 11, FIG. 12 and FIG 15, the upper shaft insertion through portion 112L on the other side arm portion 110L of the upper link 84 is equipped with a cylindrical portion 150 extending in the vehicle width direction, a bottom plate portion 151 closing an inner end portion in the vehicle width direction of the cylindrical portion 150, and an insertion through hole 152 which is located at a center of the bottom plate portion 151 and into which the upper shaft 88 is inserted.

The bottom plate portion 151 is formed with an annular guide groove 151a.

The upper shaft supporting hole portion 99L on the other side of the base member 81 is equipped with a shaft hole 153 into which the upper shaft 88 is inserted, and an annular guide protrusion 154 which fits in the guide groove 151a of the upper shaft insertion through portion 112L. A washer 155 for reducing the friction in pivot movement is interposed between the guide protrusion 154 and the guide groove 151a.

The other side arm portion 110L is pivotable about the upper shaft 88 with the guide protrusion 154 guided by the guide groove 151a.

Inside a cylindrical portion 150 of the other side arm portion 110L, there is formed a recess-like storage portion 156 taking the bottom plate portion 151 as a bottom portion, and the lever 134, the receiving member 135 and the shaft end portion 88a are received in the storage portion 156 at least partly.

The upper shaft 88 is equipped at the other end (left end) with the shaft end portion 88a (pressured portion) extending toward the outer side in the vehicle width direction beyond the bottom plate portion 151 of the cylindrical portion 150, and the lever 134 is attached to the shaft end portion 88a.

The lever 134 is pivotally supported on a lever support shaft 157 that is inserted into the shaft end portion 88a in a direction orthogonal to the axial direction of the shaft end portion 88a, and the lever 134 is pivotable about the lever support shaft 157.

The lever 134 is integrally equipped with a cam portion 134a and a lever body portion 134b. The cam portion 134a is located on an inner side in the vehicle width direction than the lever support shaft 157, and the cam portion 134a abuts on the receiving member 135. The lever body portion 134b extends in a direction almost orthogonal to the axial direction of the shaft end portion 88a in the "fixed state" in FIG. 11. The cam portion 134a is formed in an arc shape that protrudes toward the receiving member 135 side.

The receiving member 135 is held put between the cam portion 134a of the lever 134 and the bottom plate portion 151 of the cylindrical portion 150. In detail, a plate member 158 and a low friction member 159 are provided between the receiving member 135 and the bottom plate portion 151. The plate member 158 abuts on the bottom plate portion 151, and the low friction member 159 is interposed between the plate member 158 and the receiving member 135.

The receiving member 135 is formed in an almost U-shape as viewed in the axial direction of the upper shaft 88, and the receiving member 135 is arranged with an inner side portion of the U-shape fitted on the upper shaft 88. In detail, the receiving member 135 is equipped with a pair of arm portions 135a, 135a extending along both lateral sides of the upper shaft 88 and a coupling portion 135b mutually tying base end portions of the arm portions 135a, 135a. The arm portions 135a, 135a are provided with recess portions 135c formed in a curved shape in which the cam portion 134a of the lever 134 fits.

The receiving member 135 is arranged with the upper shaft 88 put between the arm portions 135a, 135a. Further, the storage portion 156 is equipped with a pair of wall portions 156a, 156a extending along outer side verges in the longitudinal direction of the arm portions 135a, 135a.

The receiving member 135 is slidable on the low friction member 159 in a direction B orthogonal to the axial direction of the shaft end portion 88a, and the sliding operation is regulated so that the arm portions 135a, 135a move along the wall portions 156a, 156a.

As shown in FIG. 11, with the lock mechanism 86 in the "fixed state", the gear 130 and the upper shaft 88 are urged by an initial load set by the elastic member 33 in a direction (urging direction A) toward the side on which the lever 134 resides in the axial direction. Further, the gear 130 and the upper shaft 88 are provided to be kept also in the "fixed state" by a toggle mechanism constituted by the lever 134 and the receiving member 135.

Thus, the gear 130 is pressured together with the upper shaft 88 in the urging direction A, and the gear 130 is engaged with the base member side engaging portion 132 and the link member side engaging portion 131. In this state, the gear 130 is restricted from pivot movement by the engagement with the base member side engaging portion 132, and the other side arm portion 110L is restricted from pivot movement by the engagement of the link member side engaging portion 131 with the gear 130.

That is, with the lock mechanism 86 in the "lock state", the gear 130 urged in the axial direction is engaged with the base member 81 and the upper link 84, whereby the upper link is restricted from pivot movement. Thus, the pivot movement of the lower link 83 that operates together with the upper link 84 is also restricted from pivot movement, and this causes the pivot position of the link member 82 to be fixed and thus causes the position of the windscreen 80 to be fixed at a designated position. Like this, by providing the upper link 84 with the gear 130, it is possible to restrict the pivot movement of the link member 82 and to fix the position of the windscreen 80 in a simplified configuration.

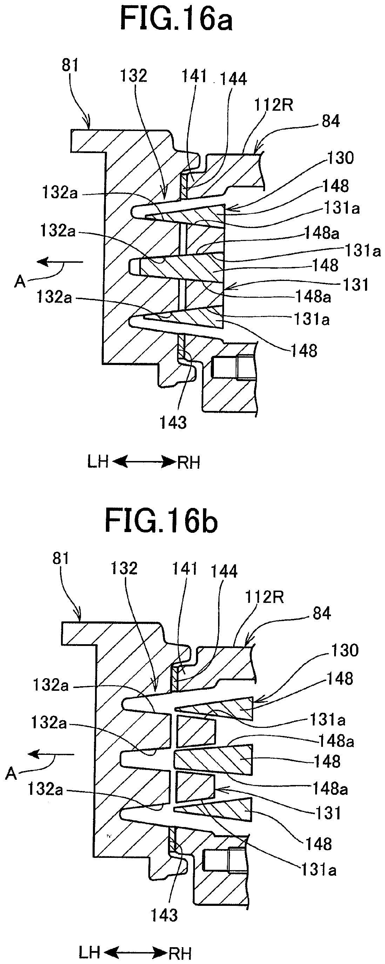

FIG. 16a is a XVI-XVI sectional view in FIG. 11.

As shown in FIG. 16a, the tooth 148 of the gear 130 takes slanted taper surfaces 148a, 148a as the surfaces in the thickness direction, and thus, in the state urged by the elastic member 133, the taper surfaces 148a, 148a can be held in close contact with a groove portion 132a of the base member side engaging portion 132 and a groove portion 131a of the link member side engaging portion 131. Therefore, it is possible to reduce the looseness in meshing of the gear 130 and to fix the windscreen 80 in a state being little in looseness.

Further, as shown in FIG. 11, the tooth portion 146 of the gear 130 is formed in a taper shape in which the diameter of the outer peripheral portion 146a gradually becomes slender toward the urging direction A of the elastic member 133, and thus, it is possible to make the outer peripheral portion 146a closely contact the groove portion 132a of the base member side engaging portion 132 and the groove portion 131a of the link member side engaging portion 131. Therefore, it is possible to reduce the looseness in meshing of the gear 130 and to fix the windscreen 80 in a state being little in looseness.

When the lever 134 laid down in the "fixed state" is pivotally operated to be raised as shown in FIG. 12, the lock mechanism 86 becomes a "movable state".

In the "movable state", the operation of the lever 134 causes the cam portion 134a to move radially outward of the shaft end portion 88a relative to the position in the "fixed state", and this causes the receiving member 135 to slide in a direction B orthogonal to the axial direction of the shaft end portion 88a.

When the "fixed state" turns to the "movable state", an axial distance G of the upper shaft 88 between the lever support shaft 157 and the receiving member 135 becomes shorter, and the upper shaft 88 moves by a variation amount of the distance G in a direction opposite to the urging direction A.

That is, in the "movable state", the upper shaft 88 moves by being pressured by the lever 134 against the urging force of the elastic member 133, and this causes the gear 130 to move in the direction opposite to the urging direction A. The shaft end portion 88a is a pressured portion pressured by the lever 134.

FIG. 16b is a XVI-XVI sectional view in FIG. 12.

As shown in FIG. 12 and FIG. 16b, in the "movable state", the gear 130 is moved in a direction opposite to the urging direction A, and the engagement of the gear 130 with the base member side engaging portion 132 is released. Thus, the upper link 84 becomes pivotable relative to the base member 81.

That is, in the windshield device 78, the gear 130 is taken in and out the base member side engaging portion 132, so that the upper link 84 can be switched between the "movable state" and the "fixed state".

Further, in the "movable state", the gear 130 is held in the stated engaged with the link member side engaging portion 131. Thus, when the upper link 84 is pivotally moved in the "movable state", the upper link 84 and the gear 130 are integrally pivoted.

In detail, the gear 130 and the upper shaft 88 are integral, and thus, when the upper link 84 is pivotally moved in the "movable state", the upper link 84, the gear 130, the upper shaft 88, the lever 134 and the receiving member 35 are integrally pivoted.

When the lever 134 is operated from the "movable state" to a state of being laid down, the gear 130 is engaged with the base member side engaging portion 132 and the link member side engaging portion 131 to become the "fixed state" in FIG. 11.

In the present first embodiment, the taper surfaces 148a, 148a and the outer peripheral portion 146a of the gear 130 are formed in a taper shape which becomes slender toward the moving direction when a change is made from the "movable state" to the "fixed state", that is, in an opposite direction (urging direction A) to the pressured direction by the lever 134. Thus, it is possible to engage the gear 130 smoothly with the link member side engaging portion 131 and the base member side engaging portion 132.

Further, because of the gear 130 being a taper shape, the gear 130 can easily be released by the operation of the lever 134 from the link member side engaging portion 131 and the base member side engaging portion 132. Therefore, the switchover from the "fixed state" to the "movable state" can be done smoothly.

Here, description will be made regarding one example of an operation procedure for changing the position of the windscreen 80.

In FIG. 4, the windscreen 80 is located at the "low position", and in this state, the lock mechanism 86 becomes the "fixed state" shown in FIG. 11, and the windscreen 80 is fixed to the "low position". In the "low position", rubber members 101d, 101d (FIG. 4) of the lower arm portions 101, 101 are in abutment on the lower stopper portions 95a, 95a of the base member 81.

When in the state of FIG. 4, the lever 134 is pivotally operated to a raised state by the rider (user), the lock mechanism 86 becomes a "movable state" shown in FIG. 12, and the upper link 84 becomes pivotable.

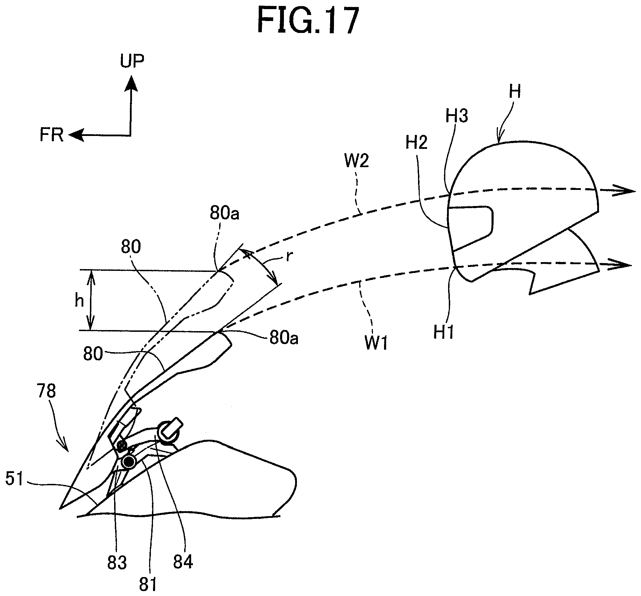

Then, when the rider pivotally moves the upper link 84 and the lower link 83 upward manually with the windscreen 80, the upper link 84, the lever 134 or the like grasped by hand, the windscreen 80 becomes the "high position" shown in FIG. 5. At the "high position", the rubber members 101d, 101d of the lower arm portions 101, 101 are in abutment on the upper stopper portions 95b, 95b of the base member 81. When in this state, the lever 134 is operated to a laid-down state, the lock mechanism 86 becomes the "fixed state" shown in FIG. 11, and the position of the windscreen 80 is fixed to the "high position". In the "high position", the windscreen 80 is positioned to be higher by the height h (FIG. 17) than the "low position" state, and its slant has been pivoted forward through an angle r (FIG. 17) beyond that in the "low position" state.

Further, by operating the lever 134, it is possible to bring the lock mechanism 86 into the "fixed state" at an "intermediate position" between the "low position" and the "high position".

In the present first embodiment, since the lock mechanism 86 is provided on the upper link 84 located behind and above the lower link 83, the lever 134 as an operating portion becomes close to the rider's side on the occupant seat 13. Thus, for the rider, it becomes easier to operate the lever 134 and to change the position of the windscreen 80.

Further, the lever 134 is provided on the other side arm portion 110L being the left side of the vehicle on which side the side kickstand 75 (FIG. 1) is provided. Thus, because the rider who got off on the left side of the motorcycle 1 after parking the motorcycle 1 with the side kickstand 75 can easily access to the lever 134, it is possible to change the position of the windscreen 80 easily.

FIG. 17 is a side view showing the flow of a travelling air along the windscreen 80.

FIG. 17 also shows the position that, during driving by the rider of a standard physique wearing a helmet H, is occupied by the head (helmet).

When the windscreen 80 is fixed to the "low position", an upper end 80a of the windscreen 80 is located below a mouth H1 of the helmet H. The travelling air W1 flowing from the upper end 80a of the windscreen 80 rearward in the state of the "low position" flows gently upward and rearward and hits the mouth H1. At the "low position", the travelling air W1 can be prevented from hitting a portion lower than the mouth H1 of the rider, and because the upper end 80a is located below eyes H2 of the helmet H, the windscreen 80 does not obstruct the visibility, so that good visibility can be secured.

When the windscreen 80 is fixed at the "high position" as indicated by the imaginary line, the upper end 80a of the windscreen 80 is located below the eyes H2 of the helmet H. Travelling air W2 flowing from the upper end 80a of the windscreen 80 rearward in the state of the "high position" flows gently upward and rearward and hits a forehead portion H3 of the helmet H. In the "high position", since the travelling air W2 hits the forehead portion H3 at the upper side, the capability of windshield around the face can be heightened. Further, in the "high position", because the upper end 80a is located below the eyes H2 of the helmet H, the windscreen 80 does not obstruct the visibility, so that good visibility can be secured.

In the present first embodiment, configurations are taken wherein the pivot position of the windscreen 80 can be changed manually, and at the same time, wherein in dependence on the setting of the shape of the teeth portions 146 of the gear 130, the pivot position of the windscreen 80 are enabled to be fixed at only three positions including the "low position", the "intermediate position" and the "high position". Therefore, by the manual operation, it is possible to easily adjust the pivot position of the windscreen 80 to modulated positions meeting the purpose of use.

As described above, according to the first embodiment to which the present invention is applied, the windshield device 78 for the motorcycle 1 is equipped with the windscreen 80 which is provided to be adjustable in height and slant about the axis of the upper shaft 88 arranged to be directed in the vehicle width direction. The windscreen 80 is mounted through the link member 82 extending from the upper shaft 88, and the link member 82 is switched between the "movable state" and the "fixed state" when the gear 130 is taken in and out in the vehicle with direction, the gear 130 being provided on the upper shaft 88 and fixing the link member 82. Thus, because the "movable state" and the "fixed state" of the link member 82 can be switched by taking in and out the gear 130 in the vehicle width direction, the gear 130 fixing the link member 82. The link member 82 can be made to be of a movable type in a compact configuration. Thus, the windshield device 78 can be made as a movable type and can be downsized. Further, since the windshield device 78 is downsized, the windshield device 78 can be simplified in appearance, and the quality of the appearance is excellent.

Further, since the shaft end portion 88a as the pressured portion that moves the upper shaft 88 in the axial direction is provided at the other end (left end) being one of the outer ends in the vehicle width direction of the upper shaft 88, it is possible to easily operate the shaft end portion 88a being on the other end of the upper shaft 88 from a lateral side of the motorcycle 1 and hence, it is easy to adjust the position of the windshield device 78.

Further, the lever 134 for pressuring the shaft end portion 88a is provided on the other end (left end) of the upper shaft 88, and the lever 134 and the shaft end portion 88a are provided at the left end of the upper shaft 88. Therefore, in the parked state with the side kickstand 75, by operating the lever 134 arranged on the left side being the side on which the motorcycle is slanted, the movable state of the windshield device 78 can be switched, so that the operability is excellent.

Further, the gear 130 is urged by the elastic member 133 in the urging direction A being the direction opposite to the direction pressured at the shaft end portion 88a, and the gear 130 is formed in a taper shape which gradually becomes slender toward the urging direction A of the elastic member 133. Therefore, it is possible to reduce the looseness through the close contact of the gear 130 with the link member 82 side. It is possible to guide the gear 130 along the taper shape and hence, to engage the gear 130 with the link member 82 side smoothly.

Further, the link member 82 is provided as the pair, the pair of link members 82 being provided on a lower-front side and an upper-rear side, and the shaft end portion 88a as the pressured portion is provided on the upper link 84 of the upper-rear side. Thus, the shaft end portion 88a becomes close to the position of the rider, so that the shaft end portion 88a can be operated easily.

Further, since the gear 130 is provided on the upper link 84 on one side (right side) being the opposite side to the shaft end portion 88a as the pressured portion, the shaft end portion 88a and the gear 130 can be provided to be distributed at the right and left, so that the compactification can be realized by the effective use of the space.

Further, since the windscreen 80 is manually adjustable to the plural stepped positions, no part is required to automate the windscreen 80, so that the windshield device 78 can be configured to be small in dimension.

Further, the base member 81 supporting the upper shaft 88 is equipped, and in the "fixed state", the gear 130 is engaged with the link member 82 and the base member 81. Thus, it is possible to fix the link member 82 to the base member 81 through the gear 130 and to fix the pivot position of the link member 82 in a simplified configuration.

### [Second Embodiment]

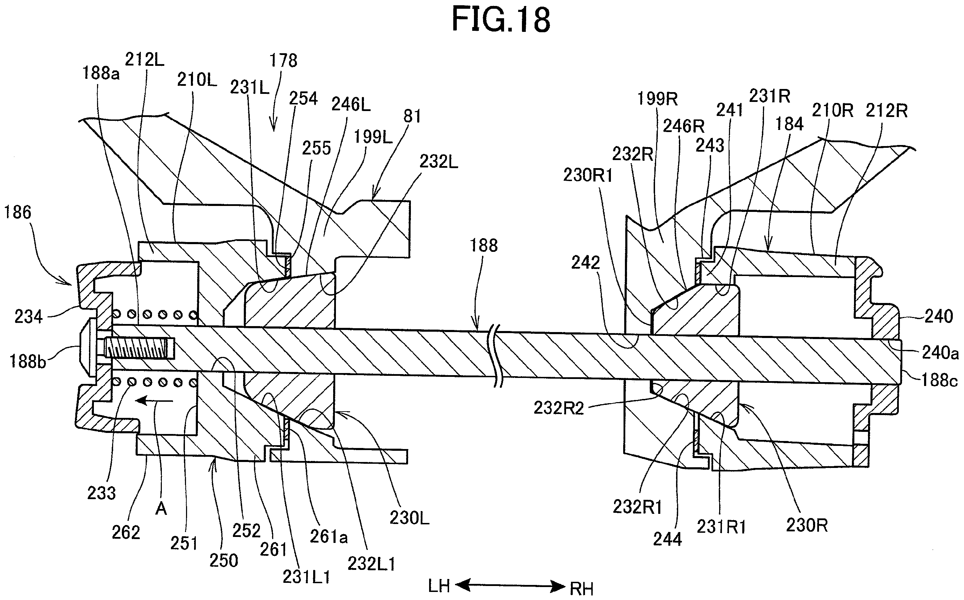

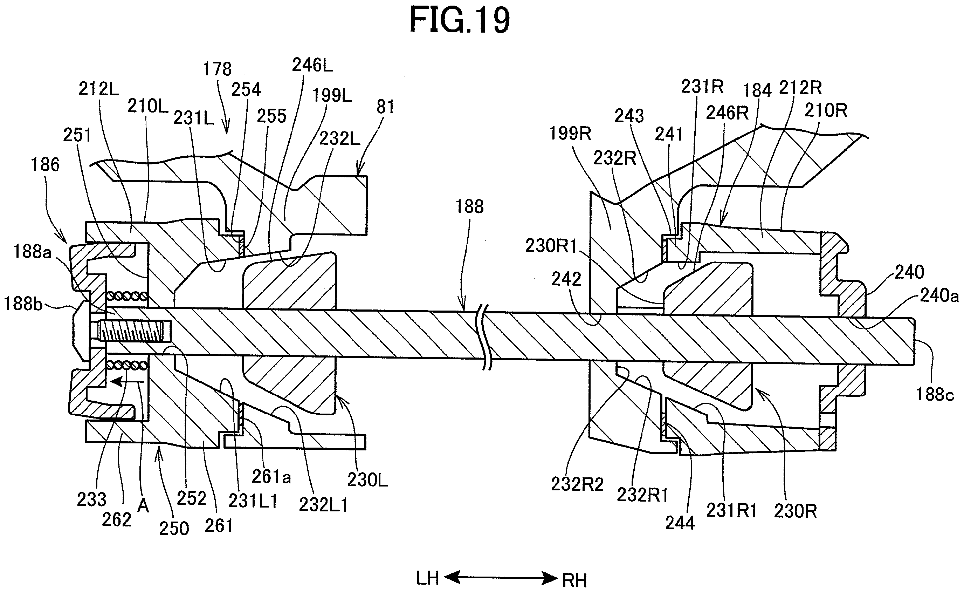

Hereafter, a second embodiment to which the present invention is applied will be described with reference to FIG. 18 and FIG. 19. In this second embodiment, portions that are configured similarly to those in the aforementioned first embodiment will be given the same reference numerals and will be omitted from description.

Although in the foregoing first embodiment, description has been made by taking as the example the configuration in which the gear 130 is provided on the one side arm portion 110R of the upper link 84, the present second embodiment differs from the foregoing first embodiment in that a one side gear 230R (gear) is provided on a one side arm portion 210R and that the other side gear 230L (gear) is provided on the other side arm portion 210L.

FIG. 18 and FIG. 19 are XI-XI sectional views in FIG. 4 in the second embodiment.

A windshield device 178 is equipped with an upper link 184 in place of the upper link 84 in the first embodiment, and the windshield device 178 is equipped with a lock mechanism 186 in place of the lock mechanism 86 in the first embodiment. The other structure of the windshield device 178 is the same as that of the windshield device 78 of the first embodiment.

The upper link 184 is equipped with a pair of right one side (right side) arm portion 210R and the left other side (left side) arm portion 210L that extend forward from the base member 81 side, and an upper coupling portion (not shown) tying a front end portion of the one side arm portion 210R and a front end portion of the other side arm portion 210L. The upper pivot shaft 90 is inserted into the aforementioned upper coupling portion. The upper link 184 and the lower link 83 constitute the link member 82 (FIG. 4) .

The one side arm portion 210R and the other side arm portion 210L are equipped at rear end portions with cylindrical upper shaft insertion through portions 212R, 212L into which an upper shaft 188 (shaft) is inserted.

The base member 81 is equipped at right and left rear end portions with an upper shaft supporting hole portions 199L, 199R into which the upper shaft 188 is inserted.

The lock mechanism 186 is equipped with the upper shaft 188, a pair of one side gear 230R and other side gear 230L, a link member one-side engaging portion 231R, a link member other-side engaging portion 231L, a base member one-side engaging portion 232R, and a base member other-side engaging portion 232L. The pair of one side gear 230R and other side gear 230L are fixed on the upper shaft 188. The link member one-side engaging portion 231R and the link member other-side engaging portion 231L are provided on the upper link 184 and engaged with the one side gear 230R and the other side gear 230L. The base member one-side engaging portion 232R and the base member other-side engaging portion 232L are provided on the base member 81 and engaged with the one side gear 230R and the other side gear 230L.

Further, the lock mechanism 186 is equipped with an elastic member 233 and a pressured member 234. The elastic member 233 urges the one side gear 230R and the other side gear 230L in an axial direction of the upper shaft 188. The pressured member 234 is fixed to the upper shaft 188 and receives the urging force of the elastic member 233.

The one side gear 230R is engaged with the link member one-side engaging portion 231R of the one side arm portion 210R, while the other side gear 230L is engaged with the link member other-side engaging portion 231L of the other side arm portion 210L. Thus, the one side gear 230R and the other side gear 230L are arranged on the upper shaft 188 to be mutually spaced by the amount corresponding to the space between the one side arm portion 210R and the other side arm portion 210L.

The one side gear 230R and the other side gear 230L are fixed on the upper shaft 188 and rotate together with the upper shaft 188. Further, the one side gear 230R and the other side gear 230L are unable to move relatively the upper shaft 188 in the axial direction.

The one side gear 230R is equipped at an outer peripheral portion with a tooth portion 246R which is configured with a plurality of teeth arrayed at regular intervals in the circumferential direction, and the tooth portion 246R is engageable with the link member one-side engaging portion 231R and the base member one-side engaging portion 232R.

The other side gear 230L is equipped with a tooth portion 246L which is configured with a plurality of teeth arrayed at regular intervals in the circumferential direction, and the tooth portion 246L is engageable with the link member other-side engaging portion 231L and the base member other-side engaging portion 232L.

The one side gear 230R and the other side gear 230L are urged through the upper shaft 188 by the urging force of the elastic member 233 to be moved toward the other side (left side, the direction indicated by the urging direction A) in the vehicle width direction.

The teeth portions 246R, 246L of the one side gear 230R and the other side gear 230L are formed in taper shapes at the outer peripheral portions and the both surfaces in the thickness direction, similarly to the gear 130 in the forgoing first embodiment.

The upper shaft insertion through portion 212R on the one side arm portion 210R of the upper link 184 is formed in a cylindrical shape extending in the vehicle width direction, and an inner end portion 241 in the vehicle width direction fits on an outer side surface of the base member 81.

The upper shaft supporting hole portion 199R on one side of the base member 81 has at a center a shaft hole 242 supporting the upper shaft 188, and the upper shaft supporting hole portion 199R is equipped at an outer side surface in the vehicle width direction with a guide portion 243 on which the inner end portion 241 of the upper shaft insertion through portion 212R fits. The guide portion 243 is a stepped portion formed in a round shape in a side view, and the guide portion 243 is arranged coaxially with the shaft hole 242.

The one side arm portion 210R is pivotable about the upper shaft 188 with the inner end portion 241 guided by the guide portion 243. A washer for reducing the friction in pivot movement is interposed between the inner end portion 241 and the guide portion 243.

The one side gear 230R is provided between the upper shaft supporting hole portion 199R of the base member 81 and the upper shaft insertion through portion 212R of the one side arm portion 210R.

The upper shaft insertion through portion 212R is equipped at an inner peripheral portion of the inner end portion 241 with the link member one-side engaging portion 231R, the link member one-side engaging portion 231R being engaged with the tooth portion 246R of the one side gear 230R. The link member one-side engaging portion 231R is equipped with a groove portion 231R1, the groove portion 231R1 being engaged with the tooth portion 246R, and the link member one-side engaging portion 231R is formed in a taper shape in correspondence to the shape of the tooth portion 246R.

An outer end portion in the vehicle width direction of the upper shaft insertion through portion 212R is provided with a disc-like cover member 240 closing an opening of the outer end portion. The cover member 240 is equipped at a center with a through hole 240a enabling the upper shaft 188 to be inserted thereinto.

The base member one-side engaging portion 232R is a hole portion which is formed inside the guide portion 243 and around the shaft hole 242 on the outer side surface of the upper shaft supporting hole portion 199R, and the groove portion 232R1 is equipped at its inner peripheral portion with a plurality of groove portions 232R1, the plurality of groove portions 232R1 being engaged with the tooth portion 246R of the one side gear 230R. The groove portions 232R1 are formed in a taper shape in correspondence to the shape of the one side gear 230R. The groove portions 232R1 and groove portions 231R1 are continuous in the axial direction.

The base member one-side engaging portion 232R is equipped with a bottom portion 232R2 which receives a distal end surface 230R1 in the axial direction of the one side gear 230R, the one side gear 230R being fit in the base member one-side engaging portion 232R from the outer side in the vehicle width direction.

The upper shaft insertion through portion 212L on the other side arm portion 210L of the upper link 184 is equipped with a cylindrical portion 250 extending in the vehicle width direction, an inner wall portion 251 dividing the interior of the cylindrical portion 250 in the vehicle width direction, and a hole 252 located at a center of the inner wall portion 251, the upper shaft 188 being inserted into the hole 252.

The cylindrical portion 250 is equipped with an inner cylindrical portion 261 located at an inner side than the inner wall portion 251 in the vehicle width direction and an outer cylindrical portion 262 located at an outer side than the inner wall portion 251 in the vehicle width direction.

An inner end portion 261a in the vehicle width direction of the inner cylindrical portion 261 fits on an outer side surface of the base member 81.

An inner peripheral portion of the inner cylindrical portion 261 is provided with the aforementioned link member other-side engaging portion 231L, the link member other-side engaging portion 231L being engaged with the tooth portion 246L of the other side gear 230L. The link member other-side engaging portion 231L is equipped with a groove portion 231L1 engaged with the tooth portion 246L, and the link member other-side engaging portion 231L is formed in a taper shape in correspondence to the shape of the other side gear 230L.

The upper shaft supporting hole portion 199L on the other side of the base member 81 is equipped at an outer side surface in the vehicle width direction with a guide portion 254, the guide portion 254 fitting in an inner end portion 261a of the inner cylindrical portion 261 of the upper shaft insertion through portion 212L. The guide portion 254 is a stepped portion formed in a round shape in a side view and is arranged coaxially with the upper shaft 188. The other side arm portion 210L is pivotable about the upper shaft 188 with the inner end portion 261a guided by the guide portion 254. A washer 255 for reducing the friction in pivot movement is interposed between the inner end portion 261a and the guide portion 254.

The upper shaft 188 is supported in a hole 252 of the inner wall portion 251 of the cylindrical portion 250.

The other side gear 230L is provided between the upper shaft insertion through portion 212L of the other side arm portion 210L and the upper shaft supporting hole portion 199L of the base member 81.

The upper shaft supporting hole portion 199L is equipped at an inner peripheral portion with the base member other-side engaging portion 232L engaged with the tooth portion 246L of the other side gear 230L. The base member other-side engaging portion 232L is equipped with a groove portion 232L1 engaged with the tooth portion 246L, and the base member other-side engaging portion 232L is formed in a taper shape in correspondence to the shape of the other side gear 230L. The groove portion 232L1 and the groove portion 231L1 are continuous in the axial direction.

The upper shaft 188 is equipped with a shaft end portion 188a (pressured portion) extending toward an outer side in the vehicle width direction than the inner wall portion 251 of the cylindrical portion 250, and the aforementioned pressured member 234 is fixed on an end surface of the shaft end portion 188a. The pressured member 234 is formed in a disc-like shape being smaller in diameter than the inside diameter of the outer cylindrical portion 262 of the other side arm portion 210L. The pressured member 234 is fixed on the upper shaft 188 by a bolt 188b, the bolt 188b is inserted into a center portion of the upper shaft 188, and the bolt 188b is fastened to the shaft end of the upper shaft 188.

The elastic member 233 is a coil spring. The elastic member 233 is provided with the shaft end portion 188a inserted into the inner peripheral portion of its coil portion, and the elastic member 233 is arranged in a compressed state between the pressured member 234 and the inner wall portion 251 of the cylindrical portion 250 inside the outer cylindrical portion 262.

The upper shaft 188 is slidably supported in the axial direction with respect to the base member 81 and the upper link 184, and the upper shaft 188 is urged by the urging force of the elastic member 233 in the urging direction A toward the outer side in the vehicle width direction. Further, the upper shaft 188 is non-pivotably supported by the base member 81.

As shown in FIG. 18, when the lock mechanism 186 is in the "fixed state", the upper shaft 188 is axially urged by an initial load set by the elastic member 233 in a direction on the side where the pressured member 234 is located.

Thus, the other side gear 230L is urged together with the upper shaft 188 by the urging force of the elastic member 233 in the urging direction A, and the other side gear 230L is held in engagement with the base member other-side engaging portion 232L and the link member other-side engaging portion 231L. In this state, the other side gear 230L is restricted from pivot movement through engagement with the base member other-side engaging portion 232L, and the other side arm portion 210L is restricted from pivot movement through the engagement of the link member other-side engaging portion 231L with the other side gear 230L. Further, the one side gear 230R is likewise pressured together with the upper shaft 188 by the urging force of the elastic member 233 in the urging direction A, and the one side gear 230R is held in engagement with the base member one-side engaging portion 232R and the link member one-side engaging portion 231R. In this state, the one side gear 230R is restricted from pivot movement through engagement with the base member one-side engaging portion 232R, and the one side arm portion 210R is restricted from pivot movement through the engagement of the link member one-side engaging portion 231R with the one side gear 230R.

That is, in the "fixed state" of the lock mechanism 186, the one side gear 230R and the other side gear 230L urged in the axial direction are engaged with the base member 81 and the upper link 184 to restrict the upper link 184 from pivot movement, whereby the position of the windscreen 80 is fixed to a designated position.

Further, in the "fixed state", the distal end surface 230R1 in the axial direction of the one side gear 230R is abutted on the bottom portion 232R2 of the base member one-side engaging portion 232R to restrict the position in the axial direction of the upper shaft 188.

When the pressured member 234 by being pressured toward the inner side in the vehicle width direction causes the upper shaft 188 to slide against the urging force of the elastic member 233 in a direction opposite to the urging direction A, the lock mechanism 186 becomes the "movable state" shown in FIG. 19.

In the "movable state", the other side gear 230L is moved together with the upper shaft 188 in the opposite direction against the urging direction A, and the other side gear 230L is released from engagements with the base member other-side engaging portion 232L and the link member other-side engaging portion 231L.

Further, in the "movable state", the one side gear 230R is moved together with the upper shaft 188 in the opposite direction against the urging direction A, and the one side gear 230R is released from engagements with the base member one-side engaging portion 232R and the link member one-side engaging portion 231R.

Here, in the second embodiment, in the "movable state", gaps in the radial direction are formed between the one side gear 230R and the link member one-side engaging portion 231R and between the other side gear 230L and the link member other-side engaging portion 231L to release the engagements, and thus, the upper link 184 becomes rotatable relative to the one side gear 230R and the other side gear 230L.

Thus, in the "movable state", the upper link 184 becomes rotatable about the upper shaft 188.

That is, in the windshield device 178, the one side gear 230R is taken into and out the base member one-side engaging portion 232R and the link member one-side engaging portion 231R in the vehicle width direction, and the other side gear 230L is taken into and out the base member other-side engaging portion 232L and the link member other-side engaging portion 231L in the vehicle width direction, whereby the upper link 184 is switched between the movable state and the fixed state. Like this, by providing upper shaft insertion through portions 212R, 212L at the right end and left end of the upper link 184 with the one side gear 230R and the other side gear 230L, it is possible to fix the upper link 184 by the two of the one side gear 230R and the other side gear 230L on the right and left and hence, to strongly fix the pivot position of the windscreen 80.

In the "movable state", the pressured member 234 comes inside the outer cylindrical portion 262. A shaft end 188c on one side of the upper shaft 188 which in the "fixed state", has been inserted into the through hole 240a of the cover member 240 to take almost the same surface as the outside surface of the cover member 240 protrudes toward the outer side of the cover member 240 when the "movable state" arises. Like this, the shaft end 188c of the upper shaft 188 protrudes when the "movable state" arises, and thus, by the visual checking of the protruding state of the shaft end 188c, the windshield device 178 can easily be confirmed of whether in the "movable state" or the "fixed state".

When the pressuring of the pressured member 234 is released in the "movable state", the upper shaft 188 is moved in the urging direction A by the urging force of the elastic member 233, and the lock mechanism 186 becomes the "fixed state".

When the pressured member 234 is operated to be pressured by the rider (user) in the state of FIG. 4, the lock mechanism 186 becomes the "movable state" shown in FIG. 19, and the upper link 184 becomes pivotable. That is, the pressured member 234 functions as an operating button (operating portion) for releasing the fixing by the lock mechanism 186.

Then, when the rider manually pivots the upper link 184 and the lower link 83 upward by grasping the windscreen 80, the upper link 184 and the like, the windscreen 80 becomes the "high position" shown in FIG. 5. When the pressuring operation of the pressured member 234 is released in this state, the lock mechanism 186 becomes the "fixed state" shown in FIG. 18, whereby the position of the windscreen 80 is fixed at the "high position".

### [Third Embodiment]

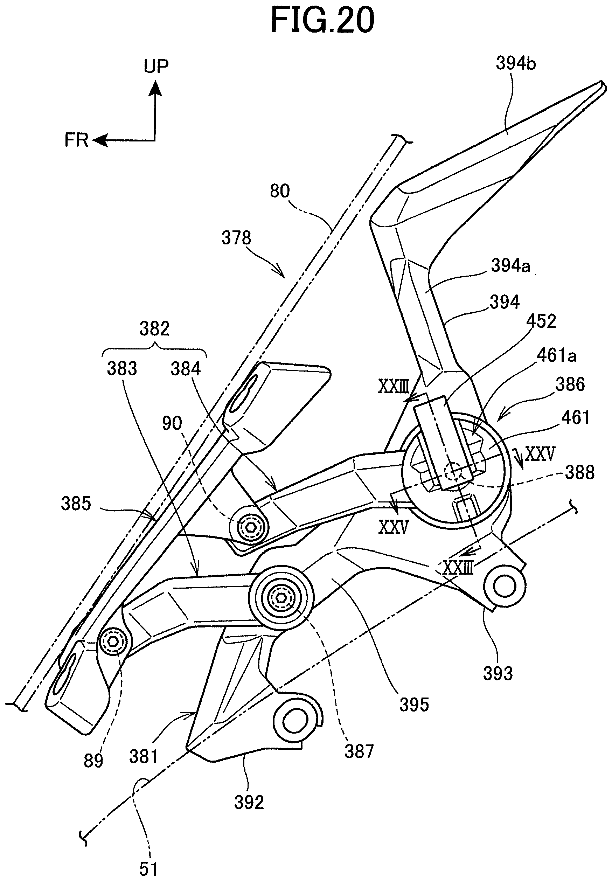

Hereafter, a third embodiment to which the present invention is applied will be described with reference to FIG. 20 through FIG. 27. In this third embodiment, portions that are configured similarly to those in the aforementioned first embodiment will be given the same reference numerals and will be omitted from description.

Although in the foregoing first embodiment, description has been made by taking as the example the configuration in which the gear 130 fixed on the upper shaft 88 is provided on the one side arm portion 110R of the upper link 84, the present third embodiment differs from the foregoing first embodiment in that a gear 450 is supported by a handle member 451 and is axially movable on the upper shaft 388.

FIG. 20 is a left side view of a windshield device 378 in the third embodiment. The windshield device 378 is configured to be vertically adjustable with the position of the windscreen 80 and is stepwise adjustable between the "low position" shown in Fig.20 and the "high position" corresponding to Fig. 5 of the first embodiment.

The windshield device 378 is equipped with a base member 381 provided over the front cover 51, a link member 382 pivotably supported by the base member 381, a screen bracket 385 supported by the link member 382 and supporting the windscreen 80, the windscreen 80 supported by the screen bracket 385, and a lock mechanism 386 for restricting the pivot position of the link member 382.

The link member 382 is equipped with a lower link 383 pivotably supported by the base member 381 and extending forward, and an upper link 384 (link member of an upper-rear side) located behind and above the lower link 383 and pivotably supported by the base member 381, the upper link 384 extending forward.

Further, the windshield device 378 is equipped with a lower shaft 387 that couples the lower link 383 to the base member 381, an upper shaft 388 (shaft) that couples the upper link 384 to the base member 381, a lower pivot shaft 89 that couples the screen bracket 385 to the lower link 383, and the upper pivot shaft 90 that couples the screen bracket 385 to the upper link 384. The lower shaft 387, the upper shaft 388, the lower pivot shaft 89, and the upper pivot shaft 90 are shafts each extending in a straight line in the vehicle width direction and are mutually in parallel.

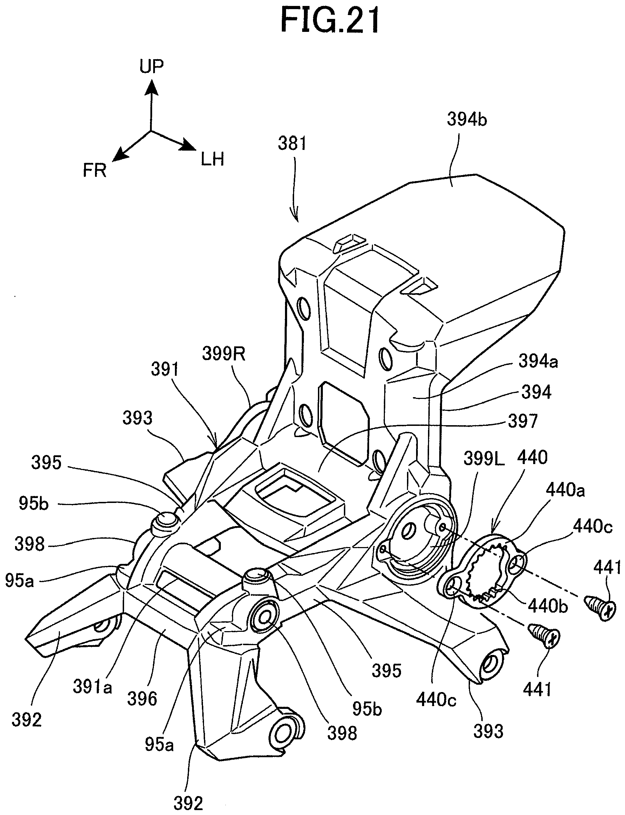

FIG. 21 is an exploded perspective view of the base member 381 and parts around the base member 381.

Referring to FIG. 20 and FIG. 21, the base member 381 is arranged to be slanted rearwardly upward as if it goes along the upper surface of the front cover 51. The base member 381 is equipped with a base body portion 391 supporting the lower link 383 and the upper link 384, a pair of right and left front stay portions 392, 392 that extend downward from both side portions at a lower end portion (front end portion) of the base body portion 391, a pair of right and left rear stay portions 393, 393 that extend downward from both side portions at an upper end portion (rear end portion) of the base body portion 391, and an upward extending portion 394 that extends upward from an upper end portion of the base body portion 391.

The base body portion 391 is equipped with a pair of right and left side plate portions 395, 395 extending in the front-rear direction along an upper surface of the front cover 51, a front end coupling portion 396 tying front end portions of the side plate portions 395, 395 in the vehicle width direction, and a rear end coupling portion 397 tying rear end portions of the side plate portions 395, 395 in the vehicle width direction.

At the front end portion of the base body portion 391, that is, at the front end portions of the right and left side plate portions 395, 395, a pair of right and left lower shaft supporting hole portions 398, 398 is provided, the lower shaft 387 being inserted into the pair of right and left lower shaft supporting hole portions 398, 398. The lower shaft supporting hole portions 398, 398 are located behind the front end coupling portion 396.

The base body portion 391 is equipped with a shaft cover portion 391a tying the right and left lower shaft supporting hole portions 398, 398 in the vehicle width direction and covering the lower shaft 387 from above.

At the rear end portion of the base body portion 391, that is, at the rear end portions of the right and left side plate portions 395, 395, a pair of left and right upper shaft supporting hole portions 399L, 399R is provided, the upper shaft 388 being inserted into the pair of left and right upper shaft supporting hole portions 399L, 399R. The upper shaft supporting hole portions 399L, 399R are provided at both end portions of the rear end coupling portion 397 in the vehicle width direction. The upper shaft supporting hole portions 399L, 399R are located behind and above the lower shaft supporting hole portions 398, 398.

A ring-like inner gear 440 is fixed by a pair of gear fixing bolts 441, 441 to an outer side surface portion of the upper shaft supporting hole portion 399L on the left side.

The right and left side plate portions 395, 395 are formed to be slanted so that the space therebetween in the vehicle width direction becomes larger on the rear end side. Thus, the space between the left and right upper shaft supporting hole portions 399L, 399R is larger than the space between the left and right lower shaft supporting hole portions 398, 398.

The base member 381 is fitted on the upper surface of the front cover 51 at the front stay portions 392, 392 and the rear stay portions 393, 393. The base member 381 is fixed to the body by fixtures (not shown) that are inserted into lower end portions of the front stay portions 392, 392 and the rear stay portions 393, 393. In detail, the front stay portions 392, 392 and the rear stay portions 393, 393 are fastened to a frame member (not shown) which is located ahead of the head pipe 14 and within the front cover 51.

The upward extending portion 394 of the base member 381 is equipped with a vertical wall portion 394a extending upward from the base body portion 391 and an upper wall portion 394b extending rearward from an upper end of the vertical wall portion 394a. The windscreen 80 extends rearwardly upward across the upper side of the upper wall portion 394b.

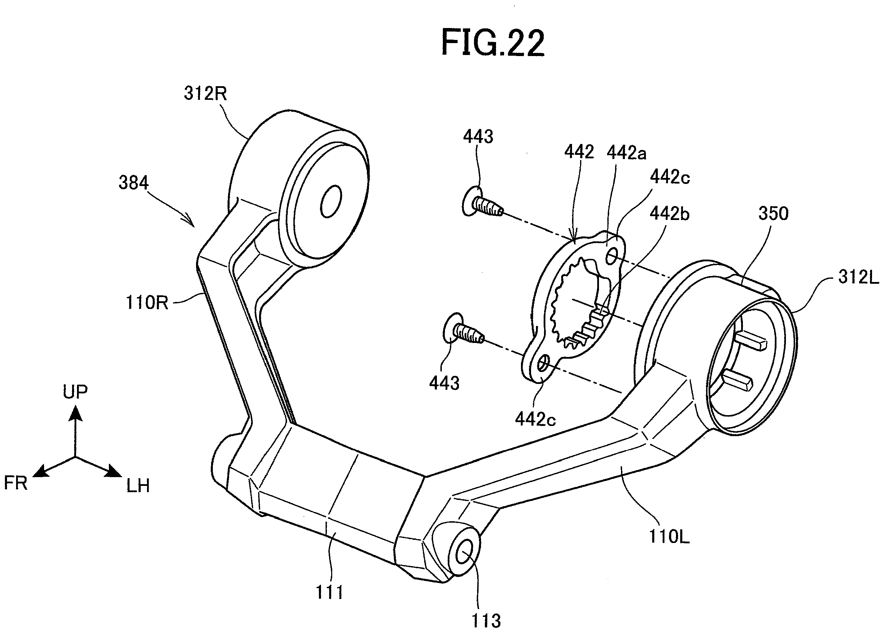

FIG. 22 is a perspective view in which the upper link 384 is viewed from front side.

Referring to FIG. 20 and FIG. 22, the upper link 384 is equipped with a pair of right one side arm portion 110R and left other side arm portion 110L extending forward from the base member 381 side and an upper coupling portion 111.

The one side arm portion 110R and other side arm portion 110L are equipped with cylindrical upper shaft insertion through portions 312R, 312L at rear end portions, the upper shaft 388 is inserted through the cylindrical upper shaft insertion through portions 312R, 312L.

A ring-like outer gear 442 is fixed by a pair of fixing bolts 443, 443 to an inner side surface portion in the vehicle width direction of the upper shaft insertion through portion 312L of the other side arm portion 110L.

The upper link 384 is arranged so that the right and left upper shaft insertion through portions 312R, 312L overlap the upper shaft supporting hole portions 399R, 399L (FIG. 21) of the base member 381 from the outer sides in the vehicle width direction, and the upper link 384 is pivotally supported on the upper shaft 388 by inserting the upper shaft 388 into the upper shaft insertion through portions 312R, 312L and the upper shaft supporting hole portions 399R, 399L.

Further, the upper link 384 is provided with the aforementioned lock mechanism 386.

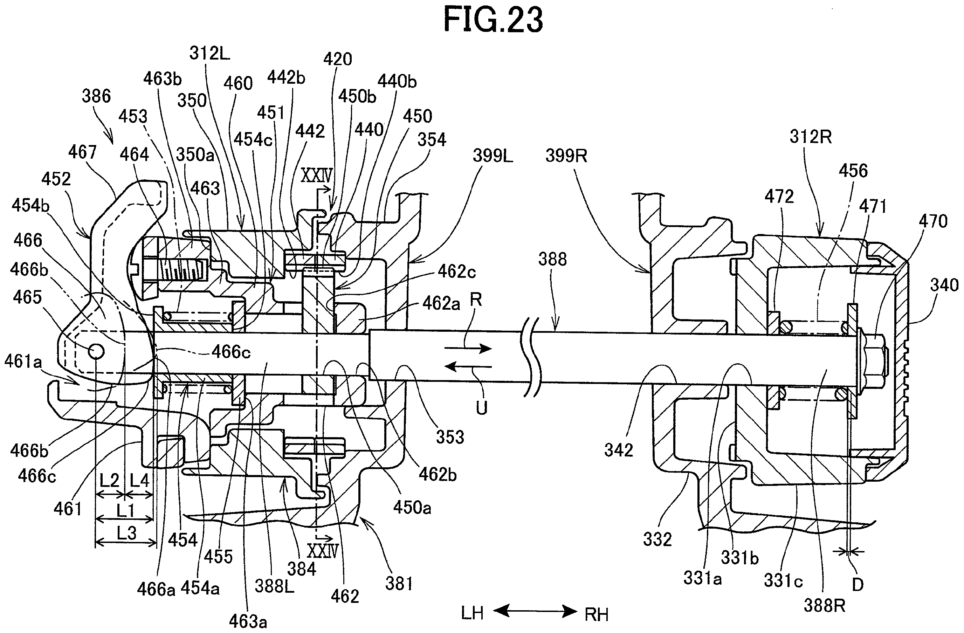

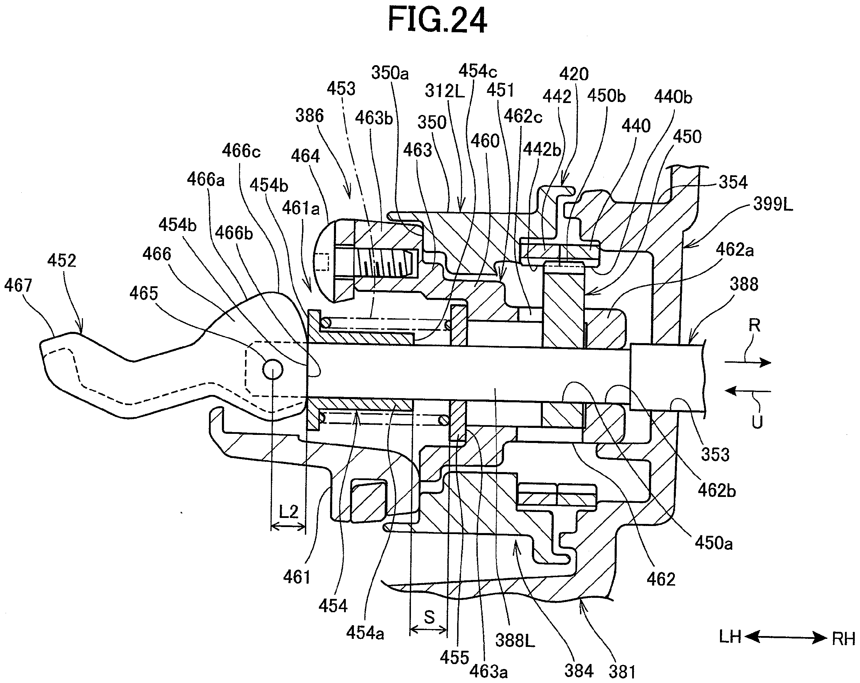

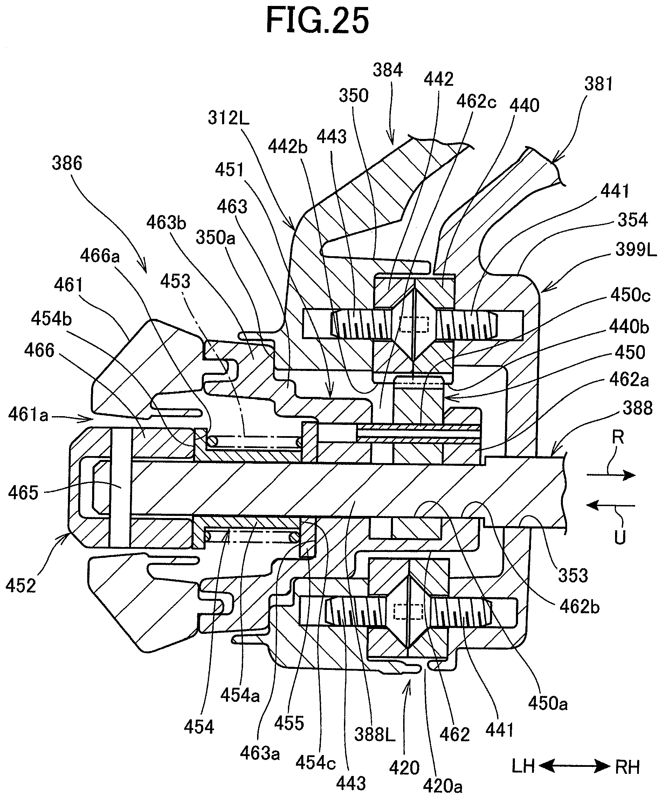

FIG. 23 is a XXIII-XXIII sectional view in FIG. 20 and is a view showing the lock mechanism 386 in the "fixed state". FIG. 24 shows the state in which the lock mechanism 386 has changed from the state of FIG. 23 to a "lock release standby state". FIG. 25 is a XXV-XXV sectional view in FIG. 20. Here, the "fixed state" places the link member 382 in a pivot-unable state, while the "lock release standby state" places a gear 450 referred to later in an axially movable state.

The lock mechanism 386 is equipped with the aforementioned upper shaft 388, the gear 450 supported on the upper shaft 388 movably in the axial direction of the upper shaft 388, the handle member 451 holding the gear 450, and the aforementioned outer gear 442 and the aforementioned inner gear 440 which mesh with the gear 450.

Further, the lock mechanism 386 is equipped with a lever member 452 for axially pressuring the gear 450 in the vehicle width direction so that the gear 450 meshes with the inner gear 440 of the base member 381, a spring member 453 interposed between the lever member 452 and the handle member 451, a collar 454 interposed between the lever member 452 and the spring member 453 and receiving one end of the spring member 453, and a washer 455 interposed between the collar 454 and the handle member 451 and receiving the other end of the spring member 453.

Further, the lock mechanism 386 is equipped on the upper shaft insertion through portion 312R at the right with an urging member 456 that axially urges the upper shaft 388 in a direction to compress the spring member 453 through the lever member 452.

The upper shaft 388 is provided to pierce through the upper shaft supporting hole portions 399L, 399R of the base member 381 in the vehicle with direction. The upper shaft 388 is equipped with one side shaft end portion 388R extending toward the outer side of the upper shaft supporting hole portion 399R on the right side in the vehicle width direction and the other side shaft end portion 388L extending toward the outer side of the upper shaft supporting hole portion 399L on the left side in the vehicle width direction.

The upper shaft supporting hole portion 399L is equipped with a shaft hole 353 and a cylindrical peripheral wall portion 354, the upper shaft 388 being inserted into the shaft hole 353, the cylindrical peripheral wall portion 354 protruding outward in the axial direction of the upper shaft 388 from around the shaft hole 353.

Referring to FIG. 21, the inner gear 440 is equipped with a ring-like body portion 440a, a plurality of teeth portions 440b formed on the inner peripheral surface of the body portion 440a, and a pair of flange portions 440c, 440c extending radially outward from the body portion 440a.

The inner gear 440 is arranged at an outer end portion of the peripheral wall portion 354, and the inner gear 440 is fixed to the base member 381 by the fixing bolts 441, 441 pierced through the flange portions 440c, 440c from the outer side in the vehicle width direction.

The upper shaft insertion through portion 312L of the upper link 384 is equipped with a cylindrical portion 350 extending in the axial direction of the upper shaft 388. Inside the cylindrical portion 350, a storage portion is formed for storing the handle member 451. The outer side end in the vehicle width direction of the cylindrical portion 350 is formed with an annular receiving surface 350a that receives the handle member 451 in the axial direction of the upper shaft 388.

The upper link 384 is provided so that the inner end portion in the vehicle width direction of the cylindrical portion 350 meets the outer end portion of the peripheral wall portion 354 of the base member 381.

Referring to FIG. 22, the outer gear 442 is equipped with a ring-like body portion 442a, a plurality of teeth portions 442b formed on an inner peripheral surface of the body portion 442a, and a pair of flange portions 442c, 442c extending radially outward from the body portion 442a.

The outer gear 442 is arranged at an inner end portion in the vehicle width direction of the cylindrical portion 350, and the outer gear 442 is fixed to the upper link 384 by the fixing bolts 443, 443 pierced through the flange portions 442c, 442c from the inner side in the vehicle width direction.

The outer gear 442 and the inner gear 440 are arranged to axially put one on the other with mutual axial surfaces held to abut. Further, the outer gear 442 and the inner gear 440 are arranged in a positional relation being coaxial about the upper shaft 388.

The upper shaft 388, the handle member 451 and the gear 450 are pierced inside the inner peripheral surfaces of the teeth portions 440b and the teeth portions 442b.

The outer gear 442 and the inner gear 440 are the same parts in the present embodiment, and the teeth portions 440b and the teeth portions 442b are identical in shape. Further, the outer gear 442 and the inner gear 440 are constituted by a metal material, such as, for example, stainless steel or the like.

When the upper link 384 pivots about the upper shaft 388, the outer gear 442 is rotated together with the upper link 384 to effect relative rotation to the inner gear 440 of the base member 381.

The handle member 451 is equipped with a cylindrical member 460 and a disc-like handle portion 461 mounted on an outer end portion in the vehicle width direction of the cylindrical member 460.

The cylindrical member 460 is stored inside the cylindrical portion 350 of the upper link 384. The cylindrical member 460 is integrally equipped with a bottomed-cylindrical gear holding portion 462 arranged inside the inner peripheral portions of the outer gear 442 and the inner gear 440, and a spring holding portion 463 provided on the outer side in the vehicle width direction of the gear holding portion 462. A bottom face portion 462a on the inner side in the vehicle width direction of the gear holding portion 462 is provided with a hole 462b through which the upper shaft 388 pierces, and the other side shaft end portion 388L piercing through the hole 462b extends through the inside of the cylindrical member 460 to the outer side in the vehicle width direction beyond the cylindrical member 460.

An inner peripheral portion at the inner end portion in the vehicle width direction of the spring holding portion 463 is provided with an annular stepped portion 463a receiving a washer 455. An outer end portion in the vehicle width direction of the spring holding portion 463 is held opened on the outer side.

An outer end portion in the vehicle width direction of the spring holding portion 463 is provided with a flange portion 463b formed to be larger in outside diameter than the gear holding portion 462.

The handle portion 461 is fixed to an outer end surface of the flange portion 463b by a screw 464 inserted from an outer side in the vehicle width direction. The handle portion 461 is equipped with a lever storage portion 461a storing the upper shaft 388 and the lever member 452. The lever storage portion 461a is an open portion extending from a center portion to an outer peripheral surface of the handle portion 461.

The handle portion 461 is formed to be larger in outside diameter than the flange portion 463b. Thus, the handle portion 461 is easy for the rider to grasp.

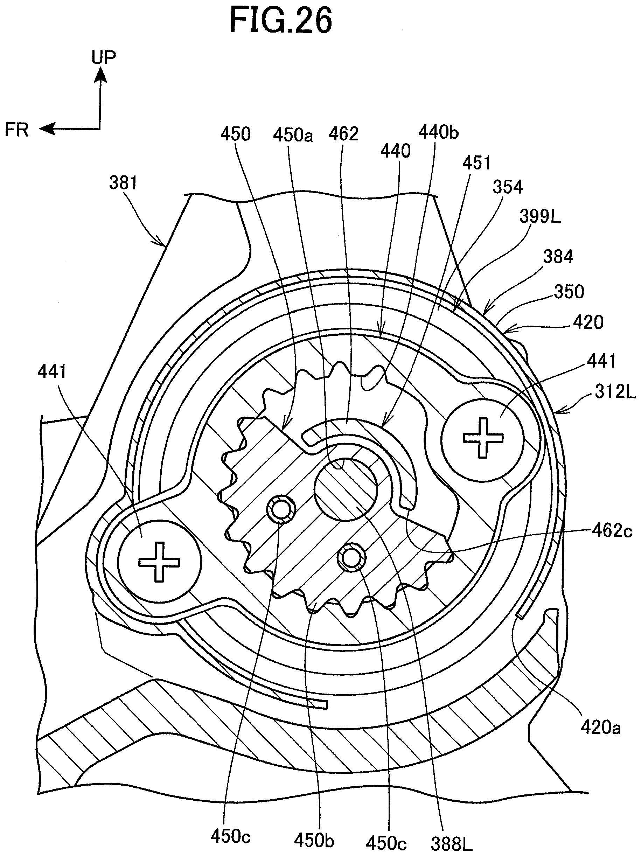

FIG. 26 is a XXVI-XXVI sectional view in FIG. 23.

Referring to FIG. 23, FIG. 25 and FIG. 26, the gear 450 is fixed to the gear holding portion 462 of the handle member 451 and is provided integrally with the handle member 451.

The gear 450 is a sector gear, and the gear 450 is provided at its rotational center with a through hole 450a through which the other side shaft end portion 388L pierces. The gear 450 is equipped on an arc outer peripheral portion of the sector shape with teeth portions 450b meshing with the teeth portions 440b, 442b of the outer gear 442 and the inner gear 440.

The gear 450 is arranged about the other side shaft end portion 388L of the upper shaft 388 in a positional relation coaxial with the outer gear 442 and the inner gear 440.

The gear 450 is axially movable on the other side shaft end portion 388L together with the handle member 451, and the gear 450 is pivotable about the other side shaft end portion 388L.

The teeth portions 450b of the gear 450 protrudes radially outward from a peripheral wall opening portion 462c formed at a portion of a peripheral wall portion of the gear holding portion 462, and the teeth portions 450b meshes with the outer gear 442 and the inner gear 440.

The gear 450 is fixed to the gear holding portion 462 by a plurality of fixing pins 450c, 450c which are inserted into the bottom face portion 462a of the gear holding portion 462 and the gear 450 in the axial direction.

At the upper shaft supporting hole portion 399L and the upper shaft insertion through portion 312L, water and the like can be restrained from entering the gear 450 side by a labyrinth portion 420 where an outer end portion of the peripheral wall portion 354 and an inner end portion of the cylindrical portion 350 overlap in radial directions. A lower portion of the labyrinth portion 420 is formed with a drain hole 420a (FIG. 26) opening downward, and the water and the like that entered the vicinity of the gear 450 are drained from the drain hole 420a.

The lever member 452 is pivotally supported on a lever support shaft 465 inserted into a shaft end of the other side shaft end portion 388L, and the lever member 452 is pivotable about the lever support shaft 465. The lever support shaft 465 is a pin provided in a direction orthogonal to the axial direction of the upper shaft 388.

The lever member 452 is integrally equipped with an eccentric cam portion 466 pressuring the collar 454 and a lever body portion 467 extending in the "fixed state" of FIG. 23 in a direction almost orthogonal to the axial direction of the other side shaft end portion 388L.

The eccentric cam portion 466 is equipped with a first cam face 466a abutting on the collar 454 in the case of the "fixed state" of FIG. 23, a second cam face 466b abutting on the collar 454 in the case of the "lock release standby state" of FIG. 24 and a third cam face 466c formed between the first cam face 466a and the second cam face 466b and at an apex portion where these cam faces meet.

The lever support shaft 465 is provided at the eccentric cam portion 466. The aforementioned cam face abutting on the collar 454 is changed through the pivot movement of the eccentric cam portion 466 about the lever support shaft 465.

In detail, a space L2 between the lever support shaft 465 and the second cam face 466b in the "lock release standby state" is shorter than a space L1 between the lever support shaft 465 and the first cam face 466a in the "fixed state". Further, a space L3 between the lever support shaft 465 and the third cam face 466c with the third cam face 466c brought into abutment with the collar 454 is longer than the space L1.

The collar 454 is equipped with a cylindrical portion 454a fitted on the other side shaft end portion 388L and a flange portion 454b formed at a shaft end on the lever member 452 side of the cylindrical portion 454a. The flange portion 454b is a pressured portion that is pressured by the first cam face 466a, the second cam face 466b and the third cam face 466c.

Further, the collar 454 is equipped at a shaft end on the opposite side to the flange portion 454b with a pressuring portion 454c pressuring the handle member 451 through the washer 455.

The collar 454 is axially movable on the other side shaft end portion 388L. The lever member 452 axially pressures the collar 454 through the flange portion 454b.

The washer 455 is formed to be larger in outside diameter than the cylindrical portion 454a of the collar 454, and the washer 455 is arranged to abut on the pressuring portion 454c of the collar 454. The washer 455 is fitted on the other side shaft end portion 388L at its inner peripheral portion.

The spring member 453 is a coil spring, and the spring member 453 is provided with its inner peripheral portion fitted on the outer peripheral portion of the cylindrical portion 454a. The spring member 453 is arranged in the compressed state between the flange portion 454b of the collar 454 and the washer 455.

The collar 454, the washer 455 and the spring member 453 are stored inside the spring holding portion 463 of the handle member 451.

As shown in FIG. 23, the upper shaft supporting hole portion 399R on the right side of the base member 381 is equipped with a shaft hole 342 through which the one side shaft end portion 388R of the upper shaft 388 pierces. The upper shaft supporting hole portion 399R is equipped with a cylindrical peripheral wall portion 332 protruding outward in the axial direction of the one side shaft end portion 388R from around the shaft hole 342.

The upper shaft insertion through portion 312R on the right side of the upper link 384 is equipped with a bottom portion 331b and a cylindrical portion 331c. The bottom portion 331b has a hole 331a through which the one side shaft end portion 388R pierces. The cylindrical portion 331c extends outward in the axial direction of the one side shaft end portion 388R from the bottom portion 331b. The upper shaft insertion through portion 312R has attached thereto a shaft cover 340 closing an opening at an outer end portion of the cylindrical portion 331c.

The upper shaft insertion through portion 312R is arranged so that the bottom portion 331b is mated from the outer side with an outer end portion of the peripheral wall portion 332 of the base member 381.

The one side shaft end portion 388R stored inside the cylindrical portion 331c of the upper link 384 has attached thereto a nut 470 fastened on a screw portion on a shaft end of the one side shaft end portion 388R, the urging member 456, an outer washer 471 abutting on the nut 470, and an inner washer 472 abutting on the bottom portion 331b. The urging member 456 is a coil spring which is remarkably greater in spring constant than the spring member 453. The urging member 456, the outer washer 471 and the inner washer 472 are provided with their inner peripheral portions fitted on the outer peripheral portion of the one side shaft end portion 388R.

The urging member 456 is compressed between the outer washer 471 and the inner washer 472, and the urging member 456 makes a force generated to urge the upper shaft 388 in the axial direction.

Next, description will be described regarding the operating procedure of the lock mechanism 386 and the state of the lock mechanism 386 resulting from operation.

In the "fixed state" of FIG. 23, the lever member 452 operated in the closed state pressures the handle member 451 through the collar 454 and the washer 455 by the urging force of the urging member 456 inward in the vehicle width direction toward the upper shaft supporting hole portions 399L side. Thus, the gear 450 integral with the handle member 451 is made to be axially moved toward the inner gear 440, and the gear 450 meshes with both of the outer gear 442 and the inner gear 440. Like this, in the "fixed state", through the meshing of the gear 450 with both of the outer gear 442 and the inner gear 440, the relative rotation between the outer gear 442 and the inner gear 440 is locked (restricted) by the gear 450, whereby the pivot position of the upper link 384 relative to the base member 381 is fixed.

In the following description, a direction in which the gear 450, the upper shaft 388 and the like move so that the gear 450 meshes with the inner gear 440 will be indicated by the arrow of a "lock direction R". Further, an opposite direction to the "lock direction R" will be indicated by the arrow of a "lock release direction U".

In detail, in the "fixed state", the first cam face 466a of the lever member 452 pressures the collar 454 against the urging force of the spring member 453, and the pressuring portion 454c of the collar 454 abuts on the washer 455. The spring member 453 is compressed between the collar 454 and the washer 455. In the "fixed state", the flange portion 454b on which the first cam face 466a abuts is spaced from the lever support shaft 465 by the space L1.

Further, in the "fixed state", the handle member 451 is restricted to a limit position in movement toward the "lock direction R" by the abutment of the flange portion 463b on the receiving surface 350a of the upper link 384.

Further, in the "fixed state", the upper shaft 388 is drawn toward the lever member 452 side by the abutment of the first cam face 466a on the collar 454. Thus, in the "fixed state", the urging member 456 is compressed by a deflection amount D relative to its free length and generates as a reaction force a force urging the upper shaft 388 in the "lock direction R". That is, in the "fixed state", it is possible to keep the lever member 452, the collar 454, the washer 455, the handle member 451 and the like contact closely with one another in the axial direction by the urging force of the urging member 456. Thus, it is possible to absorb dimensional errors of the lever member 452, the collar 454, the washer 455, the handle member 451 and the like and hence, to make the lock mechanism 386 operate properly.

As shown in FIG. 24, when the lever member 452 is pivoted by the rider to be opened outside, the lock mechanism 386 becomes the "lock release standby state", and the second cam face 466b abuts on the flange portion 454b of the collar 454.

In the "lock release standby state", the flange portion 454b on which the second cam face 466b abuts is spaced relative to the lever support shaft 465 by the space L2.

The space L2 in the "lock release standby state" is shorter than the space L1 in the "fixed state". In the present embodiment, the space L2 is about the half of the space L1. Like this, in the "lock release standby state", since the space L1 decreases to the space L2, the collar 454 becomes movable axially of the upper shaft 388 by the amount corresponding to a movable amount L4 being the difference between the space L1 and the space L2. Then, the collar 454 is moved by the urging force of the spring member 453 in the "lock release direction U", and a gap S is formed in the axial direction between the pressuring portion 454c of the collar 454 and the washer 455. Thus, the lever member 452 and the upper shaft 388 are also moved by the amount of the gap S in the "lock release direction U".

In more detail, in the "lock release standby state" of FIG. 24, the urging member 456 (FIG. 23) is enabled to stretch through the decrease of the space L1 to the space L2, and the compressed force is released. When the "lock release standby state" arises, the distance between the lever member 452 and the handle member 451 becomes longer, whereby the urging force of the spring member 453 becomes smaller.

Since the spring constant of the urging member 456 is remarkably greater than the spring constant of the spring member 453, the urging member 456 becomes almost the free length in the "lock release standby state". Thus, the upper shaft 388, the lever member 452 and the collar 454 are moved by the urging member 456 in the "lock direction R" by an amount corresponding to the deflection amount D against the spring member 453. Thus, the gap S in the "lock release standby state" becomes the length that remains by deducting the deflection amount D from the movable amount L4.

Here, since the deflection amount D is a dimension smaller in comparison with the movable amount L4, the influence of the displacement depending on the deflection amount D is not reflected as the dimension of the gap S in FIG. 24.

Further, in the "lock release standby state" of FIG. 24, the handle member 451 is pressured by the spring member 453 in the "lock direction R" and has not axially moved from the "fixed state". Thus, in the "lock release standby state", the gear 450 meshes with both of the outer gear 442 and the inner gear 440, and thus, upper link 384 are unable to pivot. Accordingly, even in the case that the operation of the lever member 452 brings about the "lock release standby state", the upper link 384 can be prevented from pivoting unexpectedly.

When the lever member 452 is pivoted from the "fixed state" to the "lock release standby state", the eccentric cam portion 466 moves from the state of the first cam face 466a abutting on the collar 454 through the state of the third cam face 466c abutting on the collar 454 to the state of the second cam face 466b abutting on the collar 454. As shown in FIG. 23, the space L3 is longer than the space L1. That is, in operating the lever member 452 to switch between the "fixed state" and the "lock release standby state", it occurs to climb over the third cam face 466c which is the largest in the space from the lever support shaft 465 to the cam face.

When the climbing-over of the third cam face 466c occurs, the upper shaft 388 is moved in the "lock release direction U", and with this, the compressed amount of the urging member 456 temporarily becomes larger than the deflection amount D in the "fixed state". Thus, the operating load in pivotally operating the lever member 452 becomes the highest at the time of climbing over the third cam face 466c. This makes it possible to give an appropriate operating feeling in the switching operation between the "fixed state" and the "lock release standby state" and at the same time, to prevent the lever member 452 from being switched unexpectedly by an external force and the like.

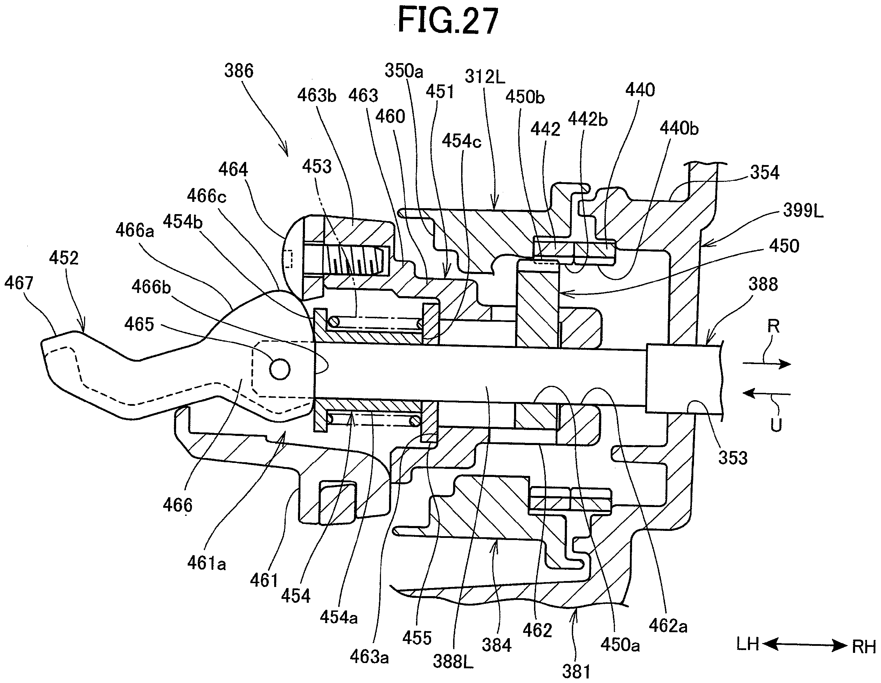

FIG. 27 is a view showing a state to which the lock mechanism 386 has changed from the state of FIG. 24 to the "lock release state".

When the lock mechanism 386 becomes the "lock release standby state" of FIG. 24, it becomes possible for the rider to move the handle member 451 by an amount of the gap S in the "lock release direction U".

When the handle member 451 is moved by the amount of the gap S, the lock mechanism 386 becomes the "lock release state" of FIG. 27.

In detail, the rider grasps the handle portion 461 of the handle member 451 by hand and slides the handle member 451 by the amount of the gap S against the spring member 453 in the "lock release direction U" to bring the washer 455 in abutment on the pressuring portion 454c of the collar 454.

Thus, the gear 450 is moved together with the handle member 451 in the "lock release direction U", and the gear 450 becomes the state that the gear 450 meshes with the outer gear 442 but is released from meshing with the inner gear 440. In this state, it becomes possible to pivot the outer gear 442 relative to the inner gear 440. Then, when the rider pivots the handle member 451 in this "lock release state", it becomes possible to pivot the upper link 384 through the gear 450 and the outer gear 442.

Then, the rider pivots the upper link 384 to locate the windscreen 80 at an arbitrary position (the "high position" of FIG. 5, for example), and the rider moves the handle member 451 in the "lock direction R". Thus, the gear 450 meshes the outer gear 442 and the inner gear 440, and the lock mechanism 386 becomes the "lock release standby state". The pivot movement of the upper link 384 is restricted, whereby the windscreen 80 is fixed at the "high position".

At this time, because the urging force of the spring member 453 enables the handle member 451 to move in the "lock direction R", the operation from the "lock release state" to the "lock release standby state" is easy.

Finally, when the rider closes the lever member 452 as shown in FIG. 23, the lock mechanism 386 becomes the "fixed state", whereby the movement in the axial direction of the handle member 451 is restricted.

As described hereinabove, according to the third embodiment to which the present invention is applied, the windscreen 80 is mounted through the link member 382 extending from the upper shaft 388, and the link member 382 is switched between the "lock release state" being a movable state and the "fixed state" when the gear 450 provided on the upper shaft 388 and fixing the link member 382 is taken into and out in the vehicle width direction. Thus, through the taking-in and taking-out in the vehicle width direction of the gear 450 fixing the link member 382, the movable state and the fixed state of the link member 382 can be switched, so that the link member 382 is made of the movable type in a compact structure. Therefore, the windshield device 378 can be made to be of a movable type and can be downsized.

Further, the gear 450 is supported on the upper shaft 388 movably in the axial direction, and the handle member 451 holding the gear 450 is provided on one of the outer ends in the vehicle width direction of the upper shaft 388. Thus, by axially moving the gear 450 from the lateral side of the vehicle through the handle member 451 at the outer end of the upper shaft 388, the movable state and the fixed state of the link member 382 can be switched, so that the position of the windshield device 378 is easy to adjust.

Further, since the lever member 452 that pressures the gear 450 in the vehicle width direction to bring the link member 382 into the fixed state is provided on the upper shaft 388, the link member 382 can be brought into the fixed state by the pressuring of the gear 450 by the lever member 452.

Further, since the urging member 456 urging the upper shaft 388 is provided so that the lever member 452 pressures the gear 450, it is possible to keep the lever member 452 in abutment on the collar 454 being a member on the gear 450 side by the urging force of the urging member 456, and thus, the occurrence of looseness can be prevented.

Further, since the lever member 452 pressures the gear 450 through the spring member 453 provided between the lever member 452 and the handle member 451, the state in which the gear 450 meshes with the link member 382 can be kept in a simplified configuration relying on the pressuring force of the spring member 453. Further, since the spring member 453 is able to keep the lever member 452 pressured on the handle member 451, the occurrence of looseness can be suppressed.

Further, when the lever member 452 is pivotally operated, the distance between the lever member 452 and the handle member 451 increases, and the urging force of the spring member 453 becomes smaller. Thus, the pivot operation of the lever member 452 is able to make the urging force of the spring member 453 smaller, and hence, it becomes possible to move the handle member 451 against the urging force of the spring member 453. That is, the configuration can be realized that the gear 450 becomes movable in interlocking relationship with the pivot operation of the lever member 452.

Further, the lever member 452 pressures the handle member 451 through the collar 454 provided between the lever member 452 and the handle member 451, and the spring member 453 is provided in the compressed state between the collar 454 and the handle member 451. When the lever member 452 is pivotally operated, the distance between the lever member 452 and the handle member 451 becomes longer, and the collar 454 is pressured by the spring member 453 to separate from the handle member 451. Thus, it is possible to keep the handle member 451 pressured strongly through the collar 454, to make the collar 454 separate from the handle member 451 by the operation of the lever member 452 and to move the gear 450 together with the handle member 451 by this separated amount.

Further, the lever member 452 is provided at the left end of the upper shaft 388. Thus, in the parked state with the side kickstand 75, the movable state of the windshield device 378 can be switched by the operation of the lever member 452 which is disposed on the left side on which the motorcycle 1 is slanted, and thus, the operability is excellent.

Furthermore, the link member 382 is provided as the pair, the pair of link members 382 being provided on a lower-front side and an upper-rear side, and the handle member 451 is provided on the upper link 384 of the upper-rear side. Thus, the handle member 451 becomes close to the position of the rider, and the handle member 451 is easy to operate.

Further, since the gear 450 and the handle member 451 are provided on the same side as the lever member 452 with respect to the right and left of the upper link 384, it is possible to successively operate the lever member 452 and the handle member 451 close to mutual positions and thus, the operability is excellent.

Incidentally, the foregoing first through third embodiments each show one embodiment to which the present invention is applied, and the present invention is not limited to the foregoing first through third embodiments.

Although in the foregoing first through third embodiments, description has been made taking as examples the configuration in which the gear is provided on the upper link 84, 184, 384, the present invention is not limited to this. For example, there may be taken a configuration in which the gear (lock mechanism) is provided on the lower link 83, 383.

Further, in the foregoing third embodiment, description has been made as one in which the urging member 456 urging the upper shaft 388 is provided so that the lever member 452 pressures the gear 450, the present invention is not limited to this, and there may be taken a configuration in which the urging member 456 is not provided. For example, there may be taken a configuration in which the urging member 456 and the inner washer 472 are not provided in the configuration of FIG. 23 and that the upper shaft 388 is formed to be shorter in correspondence to this thereby to make the outer washer 471 abut on the bottom portion 331b. Even in this configuration, where the dimensions of respective parts in the axial direction of the upper shaft 388 are controlled appropriately, the lever member 452 can pressure the gear 450 through the collar 454, the spring member 453, the washer 455 and the handle member 451. In this case, the axial displacement through which the lever member 452 moves in climbing over the third cam face 466c can be absorbed through, for example, the overall elastic deflection of the windshield device 378. Alternatively, the protruding amount of the third cam face 466c may be formed to be smaller than that in the configuration of FIG. 23. Further, although in the foregoing embodiments, description has been made taking the motorcycle 1 as an example of the saddle-ride type vehicle, the present invention is not limited to this. For example, the present invention may be applied to a three-wheel saddle-ride type vehicle with two of front wheels or rear wheels or to a saddle-ride type vehicle with four or more wheels.

In a windshield device for a saddle-ride type vehicle, the windshield device is designed to be of a movable type and to be downsized.

In a windshield device for a saddle-ride type vehicle equipped with a windscreen 80 which is provided to be adjustable in height and slant about an upper shaft 88 arranged to be directed in a vehicle width direction, the windscreen 80 is mounted through a link member 82 extending from the upper shaft 88, and the link member 82 is switched between a movable state and a fixed state upon taking in and out a gear 130 in the vehicle width direction, the gear 130 being provided on the upper shaft 88 and fixing the link member 82.

### [Reference Sings List]

- 1: Motorcycle (saddle-ride type vehicle)
- 75: Side kickstand
- 78, 178, 378: Windshield device
- 80: Windscreen (windshield portion)
- 81, 381: Base member
- 82, 382: Link member
- 84, 184, 384: Upper link (link member of upper-rear side)
- 88, 188, 388: Upper shaft (shaft)
- 88a, 188a: Shaft end portion (pressured portion)
- 130: Gear
- 133, 233: Elastic member
- 134: Lever
- 230L: Other side gear (gear)
- 230R: One side gear (gear)
- 450: Gear
- 451: Handle member
- 452: Lever member
- 453: Spring member
- 456: Urging member
- A: Urging direction

## Claims

1. A windshield device for a saddle-ride type vehicle, comprising a windshield portion (80) provided to be adjustable in height and slant about a shaft (88, 188) arranged to be directed in a vehicle width direction, and a lock mechanism (86), wherein
a base member (81) supporting the shaft (88, 188) is equipped,
the windshield portion (80) is mounted through a link member (82) extending from the shaft (88, 188), and
the link member (82) is switched between a movable state and a fixed state,
**characterized in that**
the link member (82) is switched between the movable state and the fixed state upon taking in and out a gear (130, 230L, 230R) in the vehicle width direction, the gear (130, 230L, 230R) being provided on the shaft (88, 188) and fixing the link member (82),
wherein the gear (130, 230L, 230R) is fixed to the shaft (88, 188) and is engaged with the link member (82) and the base member (81), in the fixed state,
an elastic member (133, 233) urges the gear (130, 230L, 230R) in the axial direction of the shaft (88, 188),
the lock mechanism (86) is equipped with a lever (134) for pressurizing in axial direction and a receiving member (135) for receiving one end portion of the lever (134),
the windshield device further comprises a link member side engaging portion (131, 231L, 231R) provided on the link member (82) and engaged with the gear (130, 230L, 230R) and a base member side engaging portion (132, 232L, 232R) provided on the base member (81) and engaged with the gear (130, 230L, 230R),
the gear (130, 230L, 230R) is taken in and out the base member side engaging portion (132, 232L, 232R), so that the link member (82) is be switched between the movable state and the fixed state.

2. The windshield device for the saddle-ride type vehicle according to Claim 1, wherein
the shaft (88, 188) is provided at either one of outer ends in the vehicle width direction with a pressured portion (88a, 188a) for moving the shaft (88, 188) in an axial direction.

3. The windshield device for the saddle-ride type vehicle according to Claim 2, wherein
the saddle-ride type vehicle is equipped with a side kickstand (75) that enables the saddle-ride type vehicle to be parked in the state slanted toward left,
the outer end of the shaft (88) is provided with the lever (134) for pressuring the pressured portion (88a), and the lever (134) and the pressured portion (88a) are provided at a left end of the shaft (88).

4. The windshield device for the saddle-ride type vehicle according to Claim 2 or 3, wherein
the gear (130, 230L, 230R) is urged by the elastic member (133, 233) in an opposite direction to the direction pressured at a pressured portion (88a, 188a), and
the gear (130, 230L, 230R) is formed in a taper shape tapered off in the direction urged by the elastic member (133, 233).

5. The windshield device for the saddle-ride type vehicle according to any of Claims 2 to 4, wherein
the link member (82) is provided as a pair, the pair of link members (82) being provided on a lower-front side and an upper-rear side,
the pressured portion (88a, 188a) is provided on the link member (84, 184) of the upper-rear side.

6. The windshield device for the saddle-ride type vehicle according to Claim 5, wherein
the gear (130) is provided on the link member (84) of the upper-rear side, and on the right side being a side opposite to the pressured portion (88a).

7. The windshield device for the saddle-ride type vehicle according to Claim 1 or 2, wherein
the link member (82) is provided as a pair, the pair of link members (82) is provided on a lower-front side and an upper-rear side, and
the gears (230L, 230R) are provided at a left end and a right end of the link member (184) of the upper-rear side.

8. A windshield device for a saddle-ride type vehicle, comprising a windshield portion (80) provided to be adjusted in height and slant about a shaft (388) arranged to be directed in a vehicle width direction, wherein
a base member (381) supporting the shaft (388) is equipped,
the windshield portion (80) is mounted through a link member (382) extending from the shaft (388), and
the link member (382) is switched between a movable state and a fixed state,
**characterized in that**
the link member (382) is switched between the movable state and the fixed state, upon taking in an out a gear (450) in the vehicle width direction, the gear (450) being provided on the shaft (388) and fixing the link member (382), wherein the link member (382) is equipped with a lower link (383) pivotably supported by the base member (381) and extending forward and an upper link (384) located behind and above the lower link (383) and pivotably supported by the base member (381), the upper link (384) extending forward, and wherein the upper link (384) is equipped with a pair of right one side arm portion (110R) and left other side arm portion (110L) extending forward from the base member (381) side and an upper coupling portion (111),
wherein the gear (450) is engaged with the link member (382) and the base member (381), in the fixed state,
wherein an upper shaft supporting portion (399L) is provided on a rear end portion of the base body portion (321) of the base member (381);
wherein a ring-like inner gear (440) is fixed by a pair of gear fixing bolts (441, 441) to an outer side surface portion of the upper shaft supporting hole portion (399L) on the left side;
wherein a ring-like outer gear (442) is fixed by a pair of fixing bolts (443, 443) to an inner side surface portion in the vehicle width direction of the upper shaft insertion through portion (312L) of the other side arm portion (110L), and
a lock mechanism (386) restricting pivot position of the link member (382) is equipped with the shaft (388), the gear (450) supported on the shaft (388) movably in the axial direction of the shaft (388), a handle member (451) holding the gear (450), and the ring-like outer gear (442) and the ring-like inner gear (440) which mesh with the gear (450),
wherein the gear (450) is taken in and out the ring-like inner gear (440), so that the link member (382) is be switched between the movable state and the fixed state.

9. The windshield device for the saddle-ride type vehicle according to Claim 8, wherein
the gear (450) is movably supported in an axial direction on the shaft (388), and
the shaft (388) is provided at either one of outer ends in the vehicle width direction with a handle member (451) for holding the gear (450).

10. The windshield device for the saddle-ride type vehicle according to Claim 8 or 9, wherein
the shaft (388) is provided with a lever member (452) for pressuring the gear (450) in the vehicle width direction to bring the link member (382) into the fixed state.

11. The windshield device for the saddle-ride type vehicle according to Claim 10, wherein
an urging member (456) urging the shaft (388) is provided to pressure the gear (450) by the lever member (452).

12. The windshield device for the saddle-ride type vehicle according to Claim 10 or 11, wherein
the lever member (452) pressures the gear (450) through a spring member (453) provided between the lever member (452) and the handle member (451).

13. The windshield device for the saddle-ride type vehicle according to Claim 12, wherein
the pivot operation of the lever member (452) makes a distance between the lever member (452) and the handle member (451) long and makes an urging force of the spring member (453) small.

14. The windshield device for the saddle-ride type vehicle according to Claim 12 or 13, wherein
the lever member (452) pressures the handle member (451) through a collar (454) provided between the lever member (452) and the handle member (451), the spring member (453) is provided in a compressed state between the collar (454) and the handle member (451), and
upon pivotally operating the lever member (452), the distance between the lever member (452) and the handle member (451) becomes long, and the collar (454) is separated from the handle member (451) by being pressured by the spring member (453).

15. The windshield device for the saddle-ride type vehicle according to any of Claims 10 through 14, wherein
the saddle-ride type vehicle is equipped with a side kickstand (75) that enables the saddle-ride type vehicle to be parked in a state slanted toward the left side, and
the lever member (452) is provided at the left end of the shaft (388).

16. The windshield device for the saddle-ride type vehicle according to any of Claims 10 through 15, wherein
the link member (382) is provided as a pair, the pair of link members (382) being provided on a lower-front side and an upper-rear side, and
the handle member (451) is provided on the upper link (384) of the upper-rear side.

17. The windshield device for the saddle-ride type vehicle according to Claim 16, wherein
the gear (450) and the handle member (451) are provided on the same side as the lever member (452) with respect to the right and left of the link member (384) of the upper-rear side.

18. The windshield device for the saddle-ride type vehicle according to any of Claims 1 through 17, wherein
the windshield portion (80) is manually adjustable to plural stepped positions.

## Patentansprüche

1. Windschutzscheibenvorrichtung für ein Aufsitzsattelfahrzeug, die einen Windschutzscheibenabschnitt (80), der in Höhe und Neigung um eine Welle (88, 188) verstellbar vorgesehen ist, die angeordnet ist, um in Fahrzeugbreitenrichtung ausgerichtet zu werden, sowie einen Arretiermechanismus (86) aufweist, wobei
sie mit einem die Welle (88, 188) tragenden Basiselement (81) ausgestattet ist,
der Windschutzscheibenabschnitt (80) durch ein sich von der Welle (88, 188) erstreckendes Koppelelement (82) angebracht ist, und
das Koppelelement (82) zwischen einem bewegbaren Zustand und einem fixierten Zustand geschaltet wird,
**dadurch gekennzeichnet, dass**
das Koppelelement (82) beim Ein- und Ausrücken eines Zahnrads (130, 230L, 230R) in der Fahrzeugbreitenrichtung zwischen dem bewegbaren Zustand und dem fixierten Zustand geschaltet wird, wobei das Zahnrad (130, 230L, 230R) auf der Welle (88, 188) vorgesehen ist und das Koppelelement (82) fixiert,
wobei das Zahnrad (130, 230L, 230R) im fixierten Zustand an der Welle (88, 188) fixiert ist und mit dem Koppelelement (82) und dem Basiselement (81) in Eingriff steht,
ein elastisches Element (133, 233) das Zahnrad (130, 230L, 230R) in der axialen Richtung der Welle (88, 188) spannt,
der Arretiermechanismus (86) mit einem Hebel (134) zur Druckausübung in axialer Richtung und einem Aufnahmeelement (135) zum Aufnehmen eines Endabschnitts des Hebels (134) ausgestattet ist, die Windschutzscheibenvorrichtung ferner einen Koppelelement-seitigen Eingriffsabschnitt (131, 231L, 231R), der an dem Koppelelement (82) vorgesehen ist und mit dem Zahnrad (130, 230L, 230R) in Eingriff steht, sowie einen Basiselement-seitigen Eingriffsabschnitt (132, 232L, 232R), der an dem Basiselement (81) vorgesehen ist und mit dem Zahnrad (130, 230L, 230R) in Eingriff steht, aufweist,
wobei das Zahnrad (130, 230L, 230R) in den und aus dem Basiselement-seitigen Eingriffsabschnitt (132, 232L, 232R) ein- und ausrückt, so dass das Koppelelement (82) zwischen dem bewegbaren Zustand und dem fixierten Zustand geschaltet wird.

2. Die Windschutzscheibenvorrichtung für das Aufsitzsattelfahrzeug nach Anspruch 1, wobei die Welle (88, 188) an einem von in der Fahrzeugbreitenrichtung äußeren Enden mit einem unter Druck stehenden Abschnitt (88a, 188a) versehen ist, um die Welle (88, 188) zu bewegen.

3. Die Windschutzscheibenvorrichtung für das Aufsitzsattelfahrzeug nach Anspruch 2, wobei
das Aufsitzsattelfahrzeug mit einem Seitenständer (75) ausgestattet ist, der ein Parken des Aufsitzsattelfahrzeugs in einem nach links geneigten Zustand ermöglicht,
wobei das Außenende der Welle (88) mit einem Hebel (134) versehen ist, um auf den unter Druck stehenden Abschnitt (88a) zu drücken, und der Hebel (134) und der unter Druck stehende Abschnitt (88a) an einem linken Ende der Welle (88) vorgesehen sind.

4. Die Windschutzscheibenvorrichtung für das Aufsitzsattelfahrzeug nach Anspruch 2 oder 3, wobei
das Zahnrad (130, 230L, 230R) durch das elastische Element (133, 233) in einer der Druckrichtung am unter Druck stehenden Abschnitt (88a, 188a) entgegengesetztem Richtung gespannt wird, und
das Zahnrad (130, 230L, 230R) in der durch das elastische Element (133, 233) gespannten Richtung weg kegelförmig verjüngt ausgebildet ist.

5. Die Windschutzscheibenvorrichtung für das Aufsitzsattelfahrzeug nach einem der Ansprüche 2 bis 4, wobei
das Koppelelement (82) als Paar vorgesehen ist, wobei das Paar von Koppelelementen (82) an einer unteren Vorderseite und einer oberen Rückseite vorgesehen ist, wobei der Druckabschnitt (88a, 188a) an dem Koppelelement (84, 184) an der oberen Rückseite vorgesehen ist.

6. Die Windschutzscheibenvorrichtung für das Aufsitzsattelfahrzeug nach Anspruch 5, wobei
das Zahnrad (130) an dem Koppelelement (84) der oberen Rückseite und an der rechten Seite, die eine dem unter Druck stehenden Abschnitt (88a) entgegengesetzte Seite ist, vorgesehen ist.

7. Die Windschutzscheibenvorrichtung für das Aufsitzsattelfahrzeug nach Anspruch 1 oder 2, wobei
das Koppelelement (82) als Paar vorgesehen ist, wobei das Paar von Koppelelementen (82) an einer unteren Vorderseite und einer oberen Rückseite vorgesehen ist, und
die Zahnräder (230L, 230R) an einem linken Ende und einem rechten Ende des Koppelelements (184) der oberen Rückseite vorgesehen sind.

8. Windschutzscheibenvorrichtung für ein Aufsitzsattelfahrzeug, die einen Windschutzscheibenabschnitt (80) aufweist, der in Höhe und Neigung um eine Welle (388) verstellbar vorgesehen ist, die angeordnet ist, um in Fahrzeugbreitenrichtung ausgerichtet zu werden, wobei sie mit einem die Welle (388) tragenden Basiselement (381) ausgestattet ist,
der Windschutzscheibenabschnitt (80) durch ein sich von der Welle (388) erstreckendes Koppelelement (382) angebracht ist, und
das Koppelelement (382) zwischen einem bewegbaren Zustand und einem fixierten Zustand geschaltet wird,
**dadurch gekennzeichnet, dass**
das Koppelelement (382) beim Ein- und Ausrücken eines Zahnrads (450) in der Fahrzeugbreitenrichtung zwischen dem bewegbaren Zustand und dem fixierten Zustand geschaltet wird, wobei das Zahnrad (450) auf der Welle (388) vorgesehen ist und das Koppelelement (382) fixiert, wobei das Koppelelement (382) mit einem unteren Glied (383), das an dem Basiselement (381) schwenkbar gelagert ist und sich nach vorne erstreckt, und einem oberen Glied, das hinter und über dem unteren Glied (383) angeordnet ist und von dem Basiselement (381) schwenkbar getragen wird, ausgestattet ist, wobei sich das obere Glied (384) nach vorne erstreckt, und wobei das obere Glied (384) mit einem Paar eines rechten Seitenarmabschnitts (110R) und eines linken anderen Seitenarmabschnitts (110L), das sich von der Basiselement (381)-Seite nach vorne erstreckt, und einem oberen Kupplungsabschnitt (111) ausgestattet ist,
wobei das Zahnrad (450) im fixierten Zustand mit dem Koppelelement (382) und dem Basiselement (381) in Eingriff steht,
wobei ein oberer Wellenlagerabschnitt (399L) an einem hinteren Endabschnitt des Basiskörperabschnitts (321) des Basiselements (381) vorgesehen ist,
wobei ein ringartiges Innenzahnrad (440) durch ein Paar von Zahnrad-Befestigungsbolzen (441, 441) an einem in der Fahrzeugbreitenrichtung äußeren Seitenflächenabschnitt des oberen Wellenlagerlochabschnitts (399L) an der linken Seite fixiert ist,
wobei ein ringartiges Außenzahnrad (442) durch ein Paar von Befestigungsbolzen (443, 443) an einem in der Fahrzeugbreitenrichtung inneren Seitenflächenabschnitt des oberen Wellendurchsetzabschnitts (312L) des anderen Seitenarmabschnitts (110L) fixiert ist, und
ein Arretiermechanismus (386), der eine Schwenkbewegung des Koppelelements (382) beschränkt, mit der Welle (388), dem Zahnrad (450), das an der Welle (388) in der axialen Richtung der Welle (388) bewegbar gelagert ist, einem Griffelement (451), das das Zahnrad (450) hält, und dem ringartigen Außenzahnrad (442) und dem ringartigen Innenzahnrad (440), die mit dem Zahnrad (450) in Eingriff stehen, ausgestattet ist,
wobei das Zahnrad (450) in und aus dem ringartigen Innenzahnrad (440) ein- und ausgerückt wird, so dass das Koppelelement (382) zwischen dem bewegbaren Zustand und dem fixierten Zustand geschaltet wird.

9. Die Windschutzscheibenvorrichtung für das Aufsitzsattelfahrzeug nach Anspruch 8, wobei
das Zahnrad (450) in axialer Richtung auf der Welle (388) bewegbar gelagert ist, und
die Welle (388) an einem von in der Fahrzeugbreitenrichtung äußeren Enden mit einem Griffelement (451) zum Halten des Zahnrads (450) versehen ist.

10. Die Windschutzscheibenvorrichtung für das Aufsitzsattelfahrzeug nach Anspruch 8 oder 9, wobei die Welle (388) mit einem Hebelelement (452) versehen ist, um in der Fahrzeugbreitenrichtung auf das Zahnrad (450) zu drücken, um das Koppelelement (382) in den fixierten Zustand zu bringen.

11. Die Windschutzscheibenvorrichtung für das Aufsitzsattelfahrzeug nach Anspruch 10, wobei ein Spannelement (456), das die Welle (388) vorspannt, vorgesehen ist, um durch das Hebelelement (452) auf das Zahnrad (450) zu drücken.

12. Die Windschutzscheibenvorrichtung für das Aufsitzsattelfahrzeug nach Anspruch 10 oder 11, wobei das Hebelelement (452) auf das Zahnrad (450) durch ein Federelement (453) drückt, das zwischen dem Hebelelement (452) und dem Griffelement (451) vorgesehen ist.

13. Die Windschutzscheibenvorrichtung für das Aufsitzsattelfahrzeug nach Anspruch 12, wobei
eine Schwenkbedienung des Hebelelements (452) einen Abstand zwischen dem Hebelelement (452) und dem Griffelement (451) lang macht und eine Spannkraft des Federelements (453) klein macht.

14. Die Windschutzscheibenvorrichtung für das Aufsitzsattelfahrzeug nach Anspruch 12 oder 13, wobei
das Hebelelement (452) auf das Griffelement (451) durch einen Kragen (454) drückt, der zwischen dem Hebelelement (452) und dem Griffelement (451) vorgesehen ist, wobei das Federelement (453) zwischen dem Kragenelement (454) und dem Griffelement (451) im komprimierten Zustand vorgesehen ist, und
bei einer Schwenkbedienung des Hebelelements (452), der Abstand zwischen dem Hebelelement (452) und dem Griffelement (451) lang wird, und durch den Druck des Federelements (453) der Kragen (454) von dem Griffelement (451) getrennt wird.

15. Die Windschutzscheibenvorrichtung für das Aufsitzsattelfahrzeug nach einem der Ansprüche 10 bis 14, wobei das Aufsitzsattelfahrzeug mit einem Seitenständer (45) ausgestattet ist, der das Parken des Aufsitzsattelfahrzeugs in einem zur linken Seite geneigten Zustand ermöglicht, und
das Hebelelement (452) am linken Ende der Welle (388) vorgesehen ist.

16. Die Windschutzscheibenvorrichtung für das Aufsitzsattelfahrzeug nach einem der Ansprüche 10 bis 15, wobei das Koppelelement (382) als Paar vorgesehen ist, wobei das Paar von Koppelelementen (382) an einer unteren Vorderseite und einer oberen Rückseite vorgesehen ist, und
das Griffelement (451) an dem oberen Glied (384) der oberen Rückseite vorgesehen ist.

17. Die Windschutzscheibenvorrichtung für das Aufsitzsattelfahrzeug nach Anspruch 16, wobei das Zahnrad (450) und das Griffelement (451), in Bezug auf rechts und links des Koppelelements (384) der oberen Rückseite, an der gleichen Seite wie das Hebelelement (452) vorgesehen sind.

18. Die Windschutzscheibenvorrichtung für das Aufsitzsattelfahrzeug nach einem der Ansprüche 1 bis 17, wobei der Windschutzscheibenabschnitt (80) zu mehreren Stufenpositionen manuell einstellbar ist.

## Revendications

1. Dispositif de pare-brise pour un véhicule de type à selle, comprenant une partie de pare-brise (80) prévue pour être ajustable en hauteur et inclinable autour d'un arbre (88, 188) agencé pour être dirigé dans le sens de la largeur du véhicule, et un mécanisme de verrouillage (86), dans lequel :
un élément de base (81) supportant l'arbre (88, 188) est fourni,
la partie de pare-brise (80) est montée par le biais d'un élément de liaison (82) s'étendant à partir de l'arbre (88, 188), et
l'élément de liaison (82) est commuté entre un état mobile et un état fixe,
**caractérisé en ce que** :
l'élément de liaison (82) est commuté entre l'état mobile et l'état fixe après l'insertion et le retrait d'un engrenage (130, 230L, 230R) dans le sens de la largeur du véhicule, l'engrenage (130, 230L, 230R) étant prévu sur l'arbre (88, 188) et fixant l'élément de liaison (82),
dans lequel l'engrenage (130, 230L, 230R) est fixé sur l'arbre (88, 188) et est mis en prise avec l'élément de liaison (82) et l'élément de base (81), à l'état fixe,
un élément élastique (133, 233) pousse l'engrenage (130, 230L, 230R) dans la direction axiale de l'arbre (88, 188),
le mécanisme de verrouillage (86) est équipé avec un levier (134) pour la mise sous pression dans la direction axiale et un élément de réception (135) pour recevoir une partie d'extrémité du levier (134),
le dispositif de pare-brise comprend en outre une partie de mise en prise du côté de l'élément de liaison (131, 231L, 231R) prévue sur l'élément de liaison (82) et mise en prise avec l'engrenage (130, 230L, 230R) et une partie de mise en prise du côté de l'élément de base (132, 232L, 232R) prévue sur l'élément de base (81) et mise en prise avec l'engrenage (130, 230L, 230R),
l'engrenage (130, 230L, 230R) est inséré et retiré de la partie de mise en prise du côté de l'élément de base (132, 232L, 232R), de sorte que l'élément de liaison (82) doit être commuté entre l'état mobile et l'état fixe.

2. Dispositif de pare-brise pour un véhicule de type à selle selon la revendication 1, dans lequel :
l'arbre (88, 188) est prévu au niveau de l'une des extrémités externes dans le sens de la largeur du véhicule avec une partie mise sous pression (88a, 188a) pour déplacer l'arbre (88, 188) dans une direction axiale.

3. Dispositif de pare-brise pour un véhicule de type à selle selon la revendication 2, dans lequel :
le véhicule de type à selle est équipé d'une béquille latérale (75) qui permet au véhicule de type à selle d'être stationné dans un état incliné vers la gauche,
l'extrémité externe de l'arbre (88) est prévue avec le levier (134) pour mettre sous pression la partie mise sous pression (88a), et le levier (134) et la partie mise sous pression (88a) sont prévus au niveau d'une extrémité gauche de l'arbre (88).

4. Dispositif de pare-brise pour un véhicule de type à selle selon la revendication 2 ou 3, dans lequel :
l'engrenage (130, 230L, 230R) est poussé par l'élément élastique (133, 233) dans une direction opposée à la direction mise sous pression au niveau d'une partie mise sous pression (88a, 188a), et
l'engrenage (130, 230L, 230R) est formé selon une forme conique progressivement rétrécie dans la direction poussée par l'élément élastique (133, 233).

5. Dispositif de pare-brise pour un véhicule de type à selle selon l'une quelconque des revendications 2 à 4, dans lequel :
l'élément de liaison (82) est prévu sous la forme d'une paire, la paire d'éléments de liaison (82) étant prévue sur un côté avant inférieur et un côté arrière supérieur,
la partie mise sous pression (88a, 188a) est prévue sur l'élément de liaison (84, 184) du côté arrière supérieur.

6. Dispositif de pare-brise pour un véhicule de type à selle selon la revendication 5, dans lequel :
l'engrenage (130) est prévu sur l'élément de liaison (84) du côté arrière supérieur, et sur le côté droit qui est un côté opposé à la partie mise sous pression (88a).

7. Dispositif de pare-brise pour un véhicule de type à selle selon la revendication 1 ou 2, dans lequel :
l'élément de liaison (82) est prévu sur la forme d'une paire, la paire d'éléments de liaison (82) est prévue sur un côté avant inférieur et un côté arrière supérieur, et
les engrenages (230L, 230R) sont prévus au niveau d'une extrémité gauche et d'une extrémité droite de l'élément de liaison (184) du côté arrière supérieur.

8. Dispositif de pare-brise pour un véhicule de type à selle, comprenant une partie de pare-brise (80) prévue pour être ajustée en hauteur et inclinée autour d'un arbre (388) agencé pour être dirigé dans le sens de la largeur du véhicule, dans lequel :
un élément de base (381) supportant l'arbre (388) est fourni,
la partie de pare-brise (80) est montée par le biais d'un élément de liaison (382) s'étendant à partir de l'arbre (388), et
l'élément de liaison (382) est commuté entre un état mobile et un état fixe,
**caractérisé en ce que** :
l'élément de liaison (382) est commuté entre l'état mobile et l'état fixe, après l'insertion et le retrait d'un engrenage (450) dans le sens de la largeur du véhicule, l'engrenage (450) étant prévu sur l'arbre (388) et fixant l'élément de liaison (382), dans lequel l'élément de liaison (382) est équipé avec une liaison inférieure (383) supportée de manière pivotante par l'élément de base (381) et s'étendant vers l'avant et une liaison supérieure (384) positionnée derrière et au-dessus de la liaison inférieure (383) et supportée de manière pivotante par l'élément de base (381), la liaison supérieure (384) s'étendant vers l'avant, et dans lequel la liaison supérieure (384) est équipée avec une paire composée d'une partie de bras latérale du côté droit (110R) et de l'autre partie de bras du côté gauche (110L) s'étendant vers l'avant à partir du côté de l'élément de base (381) et une partie de couplage supérieure (311),
dans lequel l'engrenage (450) est mis en prise avec l'élément de liaison (382) et l'élément de base (381), à l'état fixe,
dans lequel une partie de support d'arbre supérieur (399L) est prévue sur une partie d'extrémité arrière de la partie de corps de base (321) de l'élément de base (381) ;
dans lequel un engrenage interne de forme annulaire (440) est fixé par une paire de boulons de fixation d'engrenage (441, 441) sur une partie de surface latérale externe de la partie de trou de support d'arbre supérieur (399L) du côté gauche ;
dans lequel un engrenage externe de forme annulaire (442) est fixé par une paire de boulons de fixation (443, 443) sur une partie de surface latérale interne dans le sens de la largeur du véhicule de la partie débouchante d'insertion d'arbre supérieur (312L) de l'autre partie de bras latérale (110L), et
un mécanisme de verrouillage (386) limitant la position de pivot de l'élément de liaison (382) est équipé avec l'arbre (388), l'engrenage (450) étant supporté sur l'arbre (388) de manière mobile dans la direction axiale de l'arbre (388), un élément de poignée (451) maintenant l'engrenage (450), et l'engrenage externe de forme annulaire (442) et l'engrenage interne de forme annulaire (440) qui s'engrènent avec l'engrenage (450),
dans lequel l'engrenage (450) est inséré et retiré de l'engrenage interne de forme annulaire (440), de sorte que l'élément de liaison (382) doit être commuté entre l'état mobile et l'état fixe.

9. Dispositif de pare-brise pour un véhicule de type à selle selon la revendication 8, dans lequel :
l'engrenage (450) est supporté de manière mobile dans une direction axiale sur l'arbre (388), et
l'arbre (388) est prévu au niveau de l'une des extrémités externes dans la sens de la largeur du véhicule avec un élément de poignée (451) pour maintenir l'engrenage (450).

10. Dispositif de pare-brise pour un véhicule de type à selle selon la revendication 8 ou 9, dans lequel :
l'arbre (388) est prévu avec un élément de levier (452) pour mettre sous pression l'engrenage (450) dans le sens de la largeur du véhicule afin d'amener l'élément de liaison (382) à l'état fixe.

11. Dispositif de pare-brise pour un véhicule de type à selle selon la revendication 10, dans lequel :
un élément de poussée (456) poussant l'arbre (388) est prévu pour mettre sous pression l'engrenage (450) par l'élément de levier (452).

12. Dispositif de pare-brise pour un véhicule de type à selle selon la revendication 10 ou 11, dans lequel :
l'élément de levier (452) met l'engrenage (450) sous pression par le biais d'un élément de ressort (453) prévu entre l'élément de levier (452) et l'élément de poignée (451).

13. Dispositif de pare-brise pour un véhicule de type à selle selon la revendication 12, dans lequel :
l'opération de pivot de l'élément de levier (452) rallonge une distance entre l'élément de levier (452) et l'élément de poignée (451) et réduit une force de poussée de l'élément de ressort (453).

14. Dispositif de pare-brise pour un véhicule de type à selle selon la revendication 12 ou 13, dans lequel :
l'élément de levier (452) met l'élément de poignée (451) sous pression par le biais d'un collier (454) prévu entre l'élément de levier (452) et l'élément de poignée (451), l'élément de ressort (453) est prévu dans un état comprimé entre le collier (454) et l'élément de poignée (451), et
suite à l'opération pivotante de l'élément de levier (452), la distance entre l'élément de levier (452) et l'élément de poignée (451) se rallonge, et le collier (454) est séparé de l'élément de poignée (451) en étant mis sous pression par l'élément de ressort (453).

15. Dispositif de pare-brise pour un véhicule de type à selle selon l'une quelconque des revendications 10 à 14, dans lequel :
le véhicule de type à selle est équipé d'une béquille latérale (75) qui permet au véhicule de type à selle d'être stationné dans un état incliné vers le côté gauche, et
l'élément de levier (452) est prévu au niveau de l'extrémité gauche de l'arbre (388).

16. Dispositif de pare-brise pour un véhicule de type à selle selon l'une quelconque des revendications 10 à 15, dans lequel :
l'élément de liaison (382) est prévu sous forme de paire, la paire d'éléments de liaison (382) étant prévue sur un côté avant inférieur et un côté arrière supérieur, et
l'élément de poignée (451) est prévu sur la liaison supérieure (384) du côté arrière supérieur.

17. Dispositif de pare-brise pour un véhicule de type à selle selon la revendication 16, dans lequel :
l'engrenage (450) et l'élément de poignée (451) sont prévus sur le même côté que l'élément de levier (452) par rapport à la droite et à la gauche de l'élément de liaison (384) sur le côté arrière supérieur.

18. Dispositif de pare-brise pour un véhicule de type à selle selon l'une quelconque des revendications 1 à 17, dans lequel :
la partie de pare-brise (80) est manuellement ajustable dans une pluralité de positions étagées.
